Europäisches Patentamt

European Patent Office

Office européen des brevets

(19)

(11) Veröffentlichungsnummer : **0 178 389 B1**

(12) **EUROPÄISCHE PATENTSCHRIFT**

(45) Veröffentlichungstag der Patentschrift :
11.01.89

(21) Anmeldenummer : 85108967.2

(22) Anmeldetag : 18.07.85

(51) Int. Cl.⁴ : **B 01 D 25/12**

(54) **Kammerfilterpresse.**

(30) Priorität : **18.07.84 DE 3426527**

(43) Veröffentlichungstag der Anmeldung :
**23.04.86 Patentblatt 86/17**

(45) Bekanntmachung des Hinweises auf die Patenterteilung : **11.01.89 Patentblatt 89/02**

(84) Benannte Vertragsstaaten :
**AT BE CH FR GB IT LI LU NL SE**

(56) Entgegenhaltungen :
**DE--C--   217 590**
**FR--A--   517 876**
**FR--A-- 1 323 483**
**FR--A-- 1 356 496**
**GB--A--   22 560**
**NL--C--   100 382**

(73) Patentinhaber : **BAUKO BAUKOOPERATION GMBH**
**Münchner Bundesstrasse 34**
**A-5020 Salzburg (AT)**

(72) Erfinder : **Kupka, Dieter**
**Auweg 8**
**D-7910 Neu-Ulm (DE)**

(74) Vertreter : **Körner, Ekkehard, Dipl.-Ing.**
**Patentanwalt Maximilianstrasse 58**
**D-8000 München 22 (DE)**

EP 0 178 389 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt. wenn die Einspruchsgebühr entrichtet worden ist (Art. 99(1) Europäisches Patentübereinkommen).

Jouve, 18. rue St-Denis. 75001 Paris. France

## Beschreibung

Die Erfindung bezieht sich auf eine Kammerfilterpresse nach dem Oberbegriff des Anspruchs 1. Eine solche Kammerfilterpresse ist aus der FR-A-1 356 496 bekannt.

Diese Filterpresse ist nach Art der klassischen Filterpressen aufgebaut und besteht aus einem Gestell, horizontalen Spannstangen zum Halten der Filterplatten und der dazwischenliegenden Rahmen und einer Spannschraube, wobei in den Trübehohlräumen jeweils eine Rakel mit gebogenen Blättern angeordnet ist, die auf einer zentralen Welle befestigt ist und dazu dient, die Dicke der sich auf den Filtermedien aufbauenden Filterkuchen zu begrenzen und überschüssige Sedimente in Öffnungen abzuführen, die jeweils im unteren Abschnitt der Kammern gelegen sind. Während des Filterbetriebs rotiert die Welle mit den daran befestigten Rakeln. Sie können in der Trübe rühren und den Filterkuchen glattstreichen jedoch nicht abschaben und austragen. Wenn die Filterpresse geöffnet werden soll, um die Filtertücher zu reinigen oder auszuwechseln, ist es erforderlich, die Rahmen und Platten in axialer Richtung auseinanderzunehmen, vergleichbar etwa dem Verschieben von Perlen auf einer Schnur, zu welchem Zweck die Rakeln auf der Welle in axialer Richtung beweglich sein müssen. Für einen Dauerbetrieb, bei welchem die Trübe hoch eingedickt und ein relativ trockener Filterrückstand erzeugt werden sollen, ist diese Filterpresse nicht geeignet.

Aus der GB-A-22 560 ist eine Filterpresse ähnlicher Bauart bekannt, bei der in den Trübehohlräumen Rührarme umlaufen, die den Filtermitteln dicht gegenüberstehen, sie jedoch nicht berühren. Sie dienen dazu, Sedimente von den Oberflächen der Filtermittel abzustreichen und in Suspension zu halten. Diese Filterpresse ist für einen Betrieb, bei welchem die Trübe soweit eingedickt wird, daß sich auf den Filtermitteln feste Filterkuchen aufbauen, nicht geeignet.

Aus der FR-A-517 876 ist eine Filterpresse bekannt, bei der die Filterrahmen mit Abstand von einem gemeinsamen Gehäuse umgeben sind. Die Filterrahmen können am Ende des Filtervorgangs in Drehung versetzt werden, und es werden zum Abräumen der auf den Filterrahmen aufgebauten Filterkuchen in die Zwischenräume zwischen den Filterrahmen Arme von außen eingeschwenkt, die aufgrund der Rotation der Filterrahmen die Filterkuchen von diesen abstreifen. Ein Umrühren der Trübe zwischen den Filterrahmen während des Filtrationsvorgangs, um die Sedimente in Suspension zu halten oder um einen gleichmäßigen Filterkuchenaufbau zu gewährleisten, ist bei dieser Filterpresse nicht vorgesehen.

Die in der Praxis verwendeten Kammerfilterpressen weisen nur eine begrenzte Kapazität auf, erfordern auch eben wegen der damit verbundenen Notwendigkeit der Entfernung der Filterkuchen in relativ kurzen zeitlichen Abständen einen verhältnismäßig hohen Bedienungsaufwand, zumal das Filterkuchenentfernen mit der erforderlichen Gründlichkeit einigermaßen schwierig ist, und sie sind in aller Regel schwer, insbesondere aufgrund der materialaufwendigen, schweren Tragkonstruktion für die Kammerplatten, welche darüberhinaus verhältnismäßig viel Platz beansprucht. Ein kontinuierliches, automatisiertes Arbeiten über längere Zeiträume bei geringem Bedienungsaufwand läßt sich nur schwer erzielen. Auch läßt sich nicht immer die gewünschte Qualität der Filterkuchen erzielen. So geschieht es bei der Filterkuchenbehandlung mit Druckluft häufig, daß sich in den Filterkuchen Risse bilden, durch welche die Druckluft wirkungslos hindurchtritt.

Der Erfindung liegt die Aufgabe zugrunde, eine Kammerfilterpresse der eingangs genannten Art anzugeben, die bei einfachem sowie leichtem Aufbau und geringstmöglichem Bedienungsaufwand eine erhöhte Kapazität aufweist und über lange Zeitspannen filtern kann, dennoch eine außergewöhnlich hohe Filtrat- und Filterkuchenqualität, einschließlich einer außergewöhnlichen geringen Filterkuchenrestfeuchte, zu erzielen erlaubt.

Diese Aufgabe wird durch die kennzeichnenden Merkmale des Anspruchs 1 gelöst. Eine weitere, unter den gleichen Erfindungsgedanken fallende Lösung der gestellten Aufgabe wird durch die kennzeichnenden Merkmale des Anspruchs 13 beschrieben. Weiterbildungen dieser Lösungen sind Gegenstand der jeweils abhängigen Ansprüche.

Es ist ein besonderes Merkmal der vorliegenden Erfindung, daß die Rotoren in der Filterpresse scheibenförmig und in axialer Richtung verstellbar sind. Ihr Abstand zu den Filtermitteln kann daher an die jeweilige Situation während des Arbeitsprozesses angepaßt werden. Beim Filtrieren haben die Rotoren zu Anfang einen engen Abstand zu den Filtermitteln Trübenbewegung, um durch Rotation vor den Filtermitteln eine Trübenbewegung hervorzurufen, die ein frühzeitiges Absetzen von Sedimenten auf den Filtermitteln entgegenwirkt. Da die Trübe in den Trübekammern bei zunehmender Beschickung mit Trübe allmählich eingedickt wird, entsteht dennoch im Laufe der Zeit auf den Filtermitteln ein Filterkuchen, der anwächst. Dementsprechend können die Rotoren hinsichtlich ihrer axialen Stellung entsprechend angepaßt werden, um dem Filterkuchenaufbau Rechnung zu tragen. Sie können schließlich dazu verwendet werden, am Ende des Filtrationsvorgangs die Filterkuchen glattzustreichen. Eine oder mehrere Radialrippen auf den Rotoren begünstigen sowohl die Trübenbewegung als auch den genannten Glattstreicheffekt. Außerdem kann durch Aufbringung von axialem Druck auf die Welle bei abgeschalteter Rotation mit Hilfe der Rotoren ein mechanisches Auspressen der Filterkuchen ausgeführt werden, und schließlich ist es unter Rotation der Rotoren und mit zunehmender Verschiebung in Richtung auf die Filtermittel möglich, die Filterkuchen von den Filtermitteln abzuräumen. Um die Filterpresse zu diesem Zweck zu öffnen, werden die ersten und zweiten Kammerplatten gegeneinander in axialer Richtung verschoben.

Die Erfindung wird nachfolgend unter Bezugnahme auf die Zeichnungen anhand von Ausführungsformen näher erläutert. Darin zeigt schematisch :

Fig. 1 den mittleren Längsschnitt einer ersten Ausführungsform, wobei zwei unterschiedliche Ausbildungen von Rotoren dargestellt sind ;

Fig. 2 einen Schnitt längs der Linie II-II in Fig. 1 einer Variante, wobei zwei Sätze unterschiedlich ausgebildeter Radialrippen an Rotoren angedeutet sind ;

Fig. 3 einen Rotorlängsschnitt, wobei in der linken und rechten Hälfte unterschiedliche Rotorausbildungen veranschaulicht sind ;

Fig. 4 eine Seitenansicht einer zweiten Ausführungsform ;

Fig. 5 den mittleren Längsschnitt der Einzelheit V in Fig. 4 in größerem Maßstab ;

Fig. 6 eine Seitenansicht von Varianten der Ausführungsformen gemäß Fig. 1 bis 5, wobei in der linken Hälfte eine Variante und in der rechten Hälfte eine andere Variante gezeigt ist ;

Fig. 7 eine Hälfte eines Längsschnitts einer dritten Ausführungsform, wobei drei unterschiedliche Rotorausbildungen veranschaulicht sind ;

Fig. 8 einen Längsschnitt einer Variante der Ausführungsform gemäß Fig. 7 ;

Fig. 9 eine Hälfte eines Längsschnitts einer vierten Ausführungsform ;

Fig. 10 einen Teile des Längsschnitts gemäß Fig. 9 in größerem Maßstab ;

Fig. 11 den vollständigen Querschnitt entlang der Linie XI-XI in Fig. 10 in kleinerem Maßstab ;

Fig. 12 die Ansicht entsprechend derjenigen nach Fig. 10 einer Variante ;

Fig. 13 einen Längsschnitt von weiteren Varianten der Ausführungsform gemäß Fig. 9 bis 11, wobei in der linken Hälfte eine Variante und in der rechten Hälfte eine andere Variante dargestellt ist ;

Fig. 14 einen Längsschnitt von zusätzlichen Varianten der Ausführungsform gemäß Fig. 9 bis 11, wobei in der linken Hälfte eine Variante und in der rechten Hälfte eine andere Variante wiedergegeben ist ;

Fig. 15 eine Seitenansicht einer Abwandlung der Variante gemäß der rechten Hälfte von Fig. 13 ; und

Fig. 16 eine Seitenansicht einer weiteren Abwandlung der Variante gemäß der rechten Hälfte von Fig. 13.

Die dargestellten Kammerfilterpressen weisen mehrere Kammern 1 mit je einem Filtermittel 2 sowie einem Hohlraum 3 zur Filtrataufnahme und einem Hohlraum 4 zur Trübenaufnahme auf der einen bzw. der anderen Seite des Filtermittels 2 auf. Die zu filternde Trübe wird über eine Trübezufuhrleitung 5 zugeführt, das Filtrat über eine Filtratabzugsleitung 6 abgezogen. Die Kammern 1 können zur Entfernung der sich beim Filtern auf den Filtermitteln 2 ansammelnden und ständig wachsenden Filterkuchen 7 von den Filtermitteln 2 und aus den Hohlräumen 4 zur Trübenaufnahme nach dem Filtern geöffnet werden. Die ausgeräumten Filterkuchen 7 werden mittels einer unteren Förderschnecke 8, eines unteren Förderbandes oder sonstwie abtransportiert.

Die Hohlräume 4 zur Trübenaufnahme sind jeweils mit einem reversierend drehbaren sowie axial verschiebbaren scheibenförmigen Rotor 9 versehen, welcher dazu dient, beim Filtern die Trübe im jeweiligen Hohlraum 4 zu bewegen und den Filterkuchen 7 im Hohlraum 4 zu rühren und zu pressen, also entsprechend zu kneten, und nach dem Filtern den Filterkuchen 7 zum Entfeuchten zu pressen sowie vom angrenzenden Filtermittel 2 zu entfernen und aus dem Hohlraum 4 der zugehörigen, geöffneten Kammer 1 auszuräumen.

Die auf diese Weise beim Filten in den Kammern 1 bewirkten Bewegungsvorgänge haben eine hervorragende Qualität sowohl der Filterkuchen 7 als auch des Filtrates zur Folge und erlauben es, außerordentlich dicke Filterkuchen 7 zustande kommen zu lassen, gewährleisten also eine hohe Kapazität der Kammerfilterpressen, so daß sie über lange Zeiträume, beispielsweise 24 h im Gegensatz zu 8 h bei herkömmlichen Kammerfilterpressen, ununterbrochen filtern können, ehe es erforderlich wird, die Filterkuchen 7 auszuräumen, was im übrigen mit Hilfe der Rotoren 9 schnell und gründlich geschieht, ohne daß Handarbeit nötig ist. Auch läßt sich mit Hilfe der Rotoren 9 ein außergewöhnlich niedrige Restfeuchte der Filterkuchen 7 erzielen.

Die Hohlräume 4 zur Trübenaufnahme sind verhältnismäßig tief ausgebildet, wie zur Aufnahme des jeweiligen Rotors 9 und des jeweiligen, am Ende einer Filterperiode relativ dicken Filterkuchens 7 erforderlich. Ebenso wie die Rotoren 9 weisen die Hohlräume 4 einen kreisrunden Umriß auf, um die Rotoren 9 am Umfang zu umschließen. Auch die Hohlräume 3 zur Filtrataufnahme und die Filtermittel 2 sind kreisrund.

Die Rotoren sind auf einer gemeinsamen Rotorwelle 10 befestigt, welche drehbar sowie axial verschieblich gelagert und mit einem Dreh- sowie Axialverschiebungsantrieb 11 verbunden sowie von demselben zum Hin- und Herdrehen sowie axialen Hinund Herverschieben der Rotoren 9 in den Hohlräumen 4 zur Trübenaufnahme der Kammern 1 betätigbar ist. Der Dreh- sowie Axialverschiebungsantrieb 11 besteht beispielsweise aus einem Drehantrieb mit einem Zahnrad 11a, welches auf der Rotorwelle 10 drehfest sitzt, und aus einem Axialverschiebungsantrieb mit einem Gewinderad 11b, welches bezüglich des auf der Rotorwelle 10 axial verschieblich angeordneten Zahnrads 11a in axialer Richtung feststehend angeordnet ist und dessen Gewinde mit einem entsprechenden Gewinde der Rotorwelle 10 kämmt, oder mit hydraulischen Arbeitszylindern, mittels welcher das bezüglich der Rotorwelle 10 axial feststehend angeordnete Zahnrad 11a axial hin- und herverschiebbar ist.

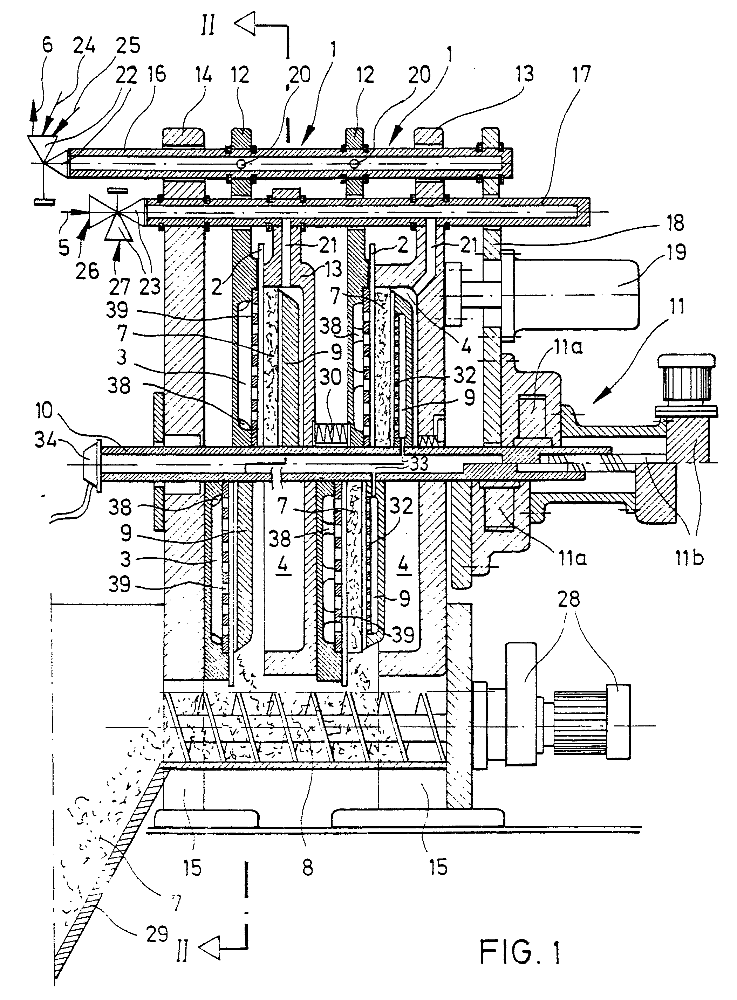

Die Kammerfilterpresse gemäß Fig. 1 weist je Kammer 1 eine erste Kammerplatte 12, in welcher der Hohlraum 3 zur Fitrataufnahme ausgebildet und an welcher das denselben abdeckende Filtermittel 2 vorgesehen ist, und eine zweite Kammerplatte 13 auf, in welcher der Hohlraum 4 zur Trübenaufnahme ausgebildet ist. Weiterhin ist an dem in Fig. 1 linken Ende eine Endplatte 14 vorgesehen. Die Rotorwelle 10 erstreckt sich waagerecht und durchsetzt die im wesentlichen kreisrunden, senkrechten Kammerplatten 12 sowie 13 und Endplatte 14 etwa in der Mitte. Die zweiten Kammerplatten 13 und die Endplatte 14 sind stationär angeordnet, wobei die Endplatte 14 und die zweite Kammerplatte 13 an dem in Fig. 1 rechten Ende der Kammerfilterpresse mit unteren Standfüßen 15 versehen sind. Entsprechende Standfüße 15 können im Bedarfsfall auch an einer oder mehreren der weiteren zweiten Kammerplatten 13 vorgesehen werden, ebenso wie es möglich ist, auch am in Fig. 1 rechten Ende der Kammerfilterpresse eine gesonderte Endplatte 14 mit unteren Standfüßen 15 zur Abstützung auf dem Boden vorzusehen. Demgegenüber sind die ersten Kammerplatten 12 beweglich angeordnet, um die Kammern 1 zum Entfernen und Ausräumen der Filterkuchen 7 mittels der Rotoren 9 öffnen zu können, was alles für alle Kammern 1 gleichzeitig geschieht, wie noch geschildert.

Die beweglichen ersten Kammerplatten 12 sind im jeweiligen Randbereich von einer ersten Verbindungsstange 16 durchsetzt, welche sich oberhalb der Rotorwelle 10 parallel zu derselben erstreckt, und an der ersten Verbindungsstange 16 befestigt. Auch die stationären zweiten Kammerplatten 13 nebst Endplatte 14 sind von einer zweiten Verbindungsstange 17 durchsetzt, welche unterhalb der ersten Verbindungsstange 16 parallel zur Rotorwelle 10 verläuft und an welcher die zweiten Kammerplatten 13 sowie die Endplatte 14 befestigt sind. Die zweite Verbindungsstange 17 durchsetzt ferner die ersten Kammerplatten 12 senkrecht, welche darauf sowie auf der Rotorwelle 10 geführt sind. Die erste Verbindungsstange 16 durchsetzt weiterhin die stationäre Endplatte 14 und die stationäre zweite Kammerplatte 13 an dem in Fig. 1 rechten Ende der Kammerfilterpresse senkrecht und ist darin geführt. Weiterhin ist die axial verschieblich gelagerte erste Verbindungsstange 16 an einem äußeren Joch 18 befestigt, welches plattenförmig ausgebildet sowie parallel zu der zweiten Kammerplatte 13 an dem in Fig. 1 rechten Ende der Kammerfilterpresse angeordnet ist und den Dreh- sowie Axialverschiebungsantrieb 11 der Rotorwelle 11 sowie einen weiteren Antrieb 19 trägt, der dazu dient, das Joch 18, die erste Verbindungsstange 16 und die ersten Kammerplatten 12 gegenüber den stationären zweiten Kammerplatten 13 und der stationären Endplatte 14 in Richtung der Rotorwelle 10 und der beiden Verbindungsstangen 16 sowie 17 hin- und herzubewegen, und der im dargestellten Fall von einem doppelt wirkenden hydraulischen Arbeitszylinder gebildet ist.

Sowohl die erste Verbindungsstange 16 als auch die zweite Verbindungsstange 17 ist hohl ausgebildet und über Verbindungsbohrungen 20 bzw. 21 an die Hohlräume 3 zur Filtrataufnahme der ersten Kammerplatten 12 bzw. an die Hohlräume 4 zur Trübenaufnahme der zweiten Kammerplatten 13 angeschlossen, ferner über ein Ventil 22 bzw. 23 an die Filtratabzugsleitung 6, eine Zuführleitung 24 für eine Flüssigkeit, vorzugsweise Wasser, zum Waschen der Filtermittel 2 von der Filtratseite her und eine Unterdruckleitung 25 zur weiteren Entfeuchtung der Filterkuchen 7 bzw. die Trübezuführleitung 5, eine Zuführleitung 26 für eine Flüssigkeit, vorzugsweise Wasser, zum Waschen der Filterkuchen 7 und/oder der Filtermittel 2 und eine Zuführleitung 27 für ein gasförmiges Druckmittel, vorzugsweise Druckluft, zur weiteren Entfeuchtung der Filterkuchen 7.

Die Kammern 1 werden zum gleichzeitigen Entfernen und Ausräumen der Filterkuchen 7 mittels der Rotoren 9 aus den Hohlräumen 4 zur Trübenaufnahme aller Kammern 1 nach einer Filterperiode gleichzeitig geöffnet. Dazu werden die ersten Kammerplatten 12 und die zweiten Kammerplatten 13 simultan auseinanderbewegt, und zwar mittels des Antriebes 19, welcher die ersten Kammerplatten 12 über das Joch 18 und die erste Verbindungsstange 16 aus der Schließstellung gemäß der oberen Hälfte von Fig. 1 in die Öffnungsstellung gemäß der unteren Hälfte von Fig. 1 bewegt, in welcher die ersten und die zweiten Kammerplatten 12 bzw. 13 aneinanderliegen bzw. voneinander entfernt sind. Da der Dreh- sowie Axialverschiebungsantrieb 11 der Rotorwelle 10 am Joch 18 befestigt ist, wird auch die Rotorwelle 10 entsprechend axial verschoben, um die Filterkuchen 7 mitzunehmen. Es genügt, in der Öffnungsstellung den Dreh-sowie Axialverschiebungsantrieb 11 einzuschalten, um die Filterkuchen 7 gründlich auszuräumen und von den Filtermitteln 2 zu entfernen. Die ausgetragenen Feststoffe gelangen mit Hilfe der durch einen Antrieb 28 in Umlauf versetzten Förderschnecke 8 in eine Auslaufrutsche oder einen Auslauftrichter 29.

Während des Filterns sind die Ventile 22 und 23 so geschaltet, daß die erste Verbindungsstange 16 mit der Filtratabzugsleitung 6 und die zweite Verbindungsstange 17 mit der Trübezufuhrleitung 5 verbunden ist und Filtrat ständig aus den Kammern 1 bzw. deren Hohlräumen 3 zur Filtrataufnahme ablaufen sowie Trübe ständig in die Kammern 1 bzw. deren Hohlräume 4 zur Trübenaufnahme einlaufen kann. Der Dreh-sowie Axialverschiebungsantrieb 11 der Rotorwelle 10 ist eingeschaltet, um die Rotoren 9 in dem Hohlräumen 4 zur Trübenaufnahme der geschlossenen Kammern 1 abwechselnd in der einen und der anderen Richtung zu drehen und axial zu verschieben, so daß die Trübe in den Hohlräumen 4 bewegt wird und die sich auf den Filtermitteln 2 bildenden Filterkuchen 7 ein rührendes sowie pressendes Kneten erfahren. Am Ende der jeweiligen Filterperiode können vor dem Öffnen der Kammern 1 die Ventile 22 und 23 betätigt werden, um die erste Verbindungsstange 16 zum Waschen der Filtermittel 2 von der Filtratseite her mit der Flüssigkeitszuführleitung 24 bzw. zur Entfeuchtung der Filterkuchen 7 susätzlich zum Verpressen mittels der Rotoren 9 mit der Unterdruckleitung 25 zu verbinden bzw. die zweite Verbindungsstange 17 zum Waschen der Filterkuchen 7 und/oder der Filtermittel 2 mit der Flüssigkeitszuführleitung 26 bzw. zur Entfeuchtung der Filterkuchen 7 zusätzlich zum Verpressen durch die Rotoren 9 mit der Druckmittelzuführleitung 27 zu verbinden. Es ist zweckmäßig, im letztgenannten Fall die Rotoren 9 umlaufen zu lassen, um die Filterkuchen 7 glattzustreichen und die Bildung von Rissen zu vermeiden, so daß das jeweils zugeführte gasförmige Druckmittel, vorzugsweise Druckluft, nich durch irgendwelche Risse oder sonstige Öffnungen in den Filterkuchen 7 wirkungslos hindurchströmen kann.

Nach dem Entfernen bzw. Ausräumen der Filterkuchen 7 aus der Kammerfilterpresse werden deren Kammern 1 wieder gleichzeitig mittels des Antriebes 19 geschlossen, welcher die ersten Kammerplatten 12 simultan gegen die stationären zweiten Kammerplatten 13 bewegt und in dieser Schließstellung dicht dagegen gedrückt hält. Es kann dann die nächste Filterperiode ablaufen.

Selbstverständlich sind geeignete Dichtungen vorgesehen, um an den Durchdringungsstellen der Rotorwelle 10 durch die Kammerplatten 12 sowie 13 abzudichten. Beispielsweise können Dichtungsbälge 30 zwischen den Kammern 1 vorgesehen werden, welche die Rotorwelle 10 umschließen und sich zwischen einer ersten Kammerplatte 12 sowie der benachbarten zweiten Kammerplatte 13 erstrecken. Auch ist eine kinematische Umkehrung dergestalt möglich, daß die zweiten Kammerplatten 13 mit den Hohlräumen 4 zur Trübenaufnahme sowie deren Verbindungsstange 17 beweglich angeordnet werden und diese zweite Verbindungsstange 17 mit dem Joch 18 versehen wird, während die ersten Kammerplatten 12 mit den Hohlräumen 3 zur Filtrataufnahme, einschließlich der ersten Verbindungsstange 16, stationär angeordnet und mit den unteren Standfüßen 15 versehen werden, welche im übrigen eine verhältnismäßig leichte und raumsparende Bauweise der Kammerfilterpresse ermöglichen, da aufgrund dieser Einzelabstützung der Kammern 1 auf dem Boden die schwere, materialaufwendige und ausladende gemeinsame Tragkonstruktion für alle Kammern, welche bei üblichen Kammerfilterpressen vorhanden ist, wegfällt.

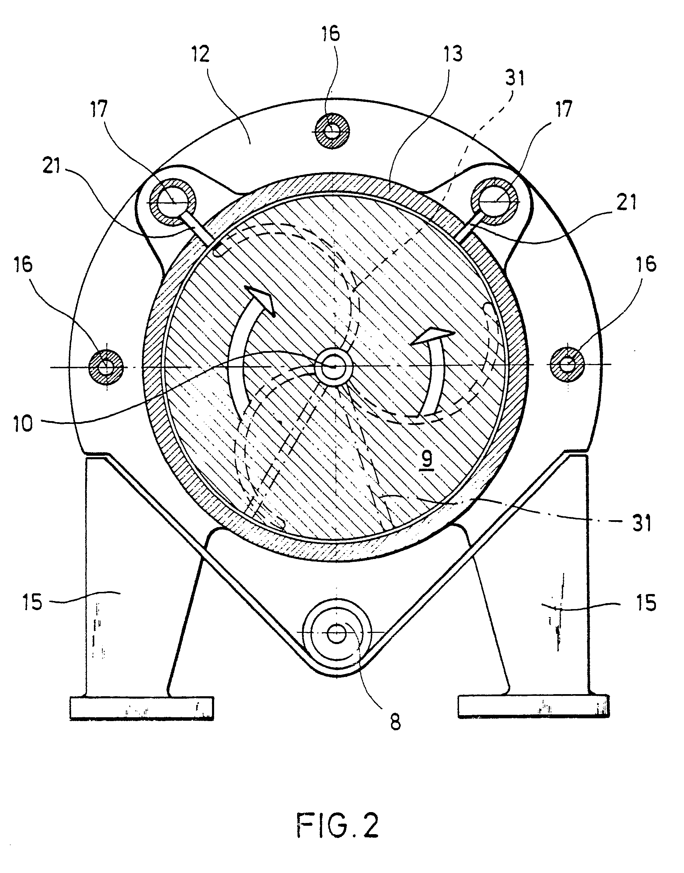

Ferner ist es möglich, statt einer einzigen ersten Verbindungsstange 16 für die ersten Kammerplatten 12 und statt einer einzigen zweiten Verbindungsstange 17 für die zweiten Kammerplatten 13 mehrere erste Verbindungsstangen 16 bzw. zweite Verbindungsstangen 17 vorzusehen, welche im wesentlichen gleichmäßig um die Rotorwelle 10 herum verteilt sind. Dieses ist der Fall bei der Kammerfilterpresse gemäß Fig. 2, welche sich im wesentlichen nur dadurch von derjenigen nach Fig. 1 unterscheidet, daß drei axial verschiebbare erste Verbindungsstangen 16 und zwei stationäre zweite Verbindungsstangen 17 vorgesehen sind. Die Verbindungsstangen 16 und 17 sind um die Rotorwelle 10 herum im wesentlichen gleichmäßig verteilt.

Gemäß Fig. 2 sind die Rotoren 9 jeweils filterkuchenseitig mit gerade oder bogenförmig verlaufenden Radialrippen 31 versehen, wie mit strichpunktierten bzw. gestrichelten Linien angedeutet. Sie werden je nach Bedarf vorgesehen, ebenso wie ihre Anzahl je nach Bedarf gewählt wird. Eine Radialrippe 31 kann in manchen Fällen genügen. Die Radialrippen 31 können beispielsweise eine rechteckige, trapezförmige, parallelogrammförmige oder abgerundete Querschnittsform aufweisen und bewirken beim Filterkuchenentfernen bzw. -ausräumen Zentrifugalkräfte, welche das Filterkuchenaustragen begünstigen.

Wie in der rechten Hälfte von Fig. 1 dargestellt, können die Rotoren 9 auch hohl ausgebildet und filterkuchenseitig mit Spritzöffnungen 32 versehen sein, um zum Waschen der Filterkuchen 7 und/oder der Filtermittel 2 mit einer geeigneten Flüssigkeit, vorzugsweise Wasser, beaufschlagt zu werden, welche über die hohl ausgebildete Rotorwelle 10 zugeführt wird, die mit Verbindungsbohrungen 33 zu den hohlen Rotoren 9 sowie einem Verteilerkopf 34 für die Waschflüssigkeit versehen ist. Auch ist es möglich, über den Verteilerkopf 34 und die hohle Rotorwelle 10 sowie deren Verbindungsbohrungen 33 die hohlen Rotoren 9 mit einem gasförmigen Druckmittel, vorzugsweise Druckluft, zu beaufschlägen, um die Filterkuchen 7 zusätzlich zu der Entfeuchtung durch Verpressen mittels der Rotoren 9 zu entfeuchten.

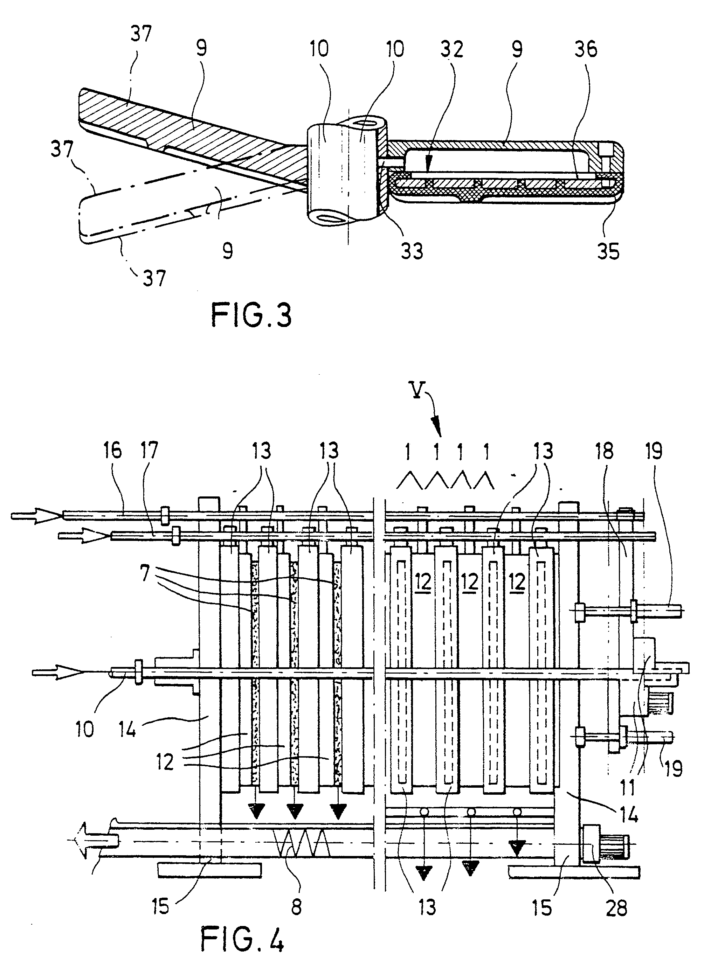

Wie in der rechten Hälfte von Fig. 3 dargestellt, können die hohlen Rotoren 9 auch jeweils filterkuchenseitig mit einer flexiblen Membran 35 versehen sein, welche auf einer perforierten Stützplatte 36 aufliegt und zum weiteren Entfeuchten gegen den benachbarten Filterkuchen 7 gedrückt werden kann, und zwar mittels eines gasförmigen oder flüssigen Druckmittels, vorzugsweise Druckwasser, welches über den Verteilerkopf 34 und die hohle Rotorwelle 10 sowie deren Verbindungsbohrungen 33 den hohlen Rotoren 9 zugeführt wird. Aus der linken Hälfte von Fig. 3 geht hervor, daß die Rotoren 9 konisch ausgebildet sein und konische Stirnflächen 37 aufweisen können, ebenso wie die Kammern 1.

Gemäß der rechten bzw. linken Hälfte von Fig. 1 liegen die Filtermittel 2 jeweils auf block- oder rippenförmigen Vorsprüngen 38 über eine perforierte Stützplatte 39 auf, welche vom Boden des Hohlraumes 3 zur Filtrataufnahme der zugehörigen ersten Kammerplatte 12 abstehen. Die rippenförmigen Vorsprünge 38 erstrecken sich radial zur Rotorwelle 10 und sind um dieselbe herum gleichmäßig verteilt, ebenso wie die blockförmigen Vorsprünge 38 in radialen, um die Rotorwelle 10 herum gleichmäßig verteilten Reihen angeordnet sein können. Insbesondere dann, wenn die Filterkuchen 7 aus stark abrasiven Feststoffen bestehen, können die Filtermittel 2 jeweils filterkuchenseitig mit einer nicht dargestellten, perforierten Abriebschutzdecke versehen werden, beispielsweise einer geschlitzten oder gelochten Metallfolie oder einem Metallgewebe.

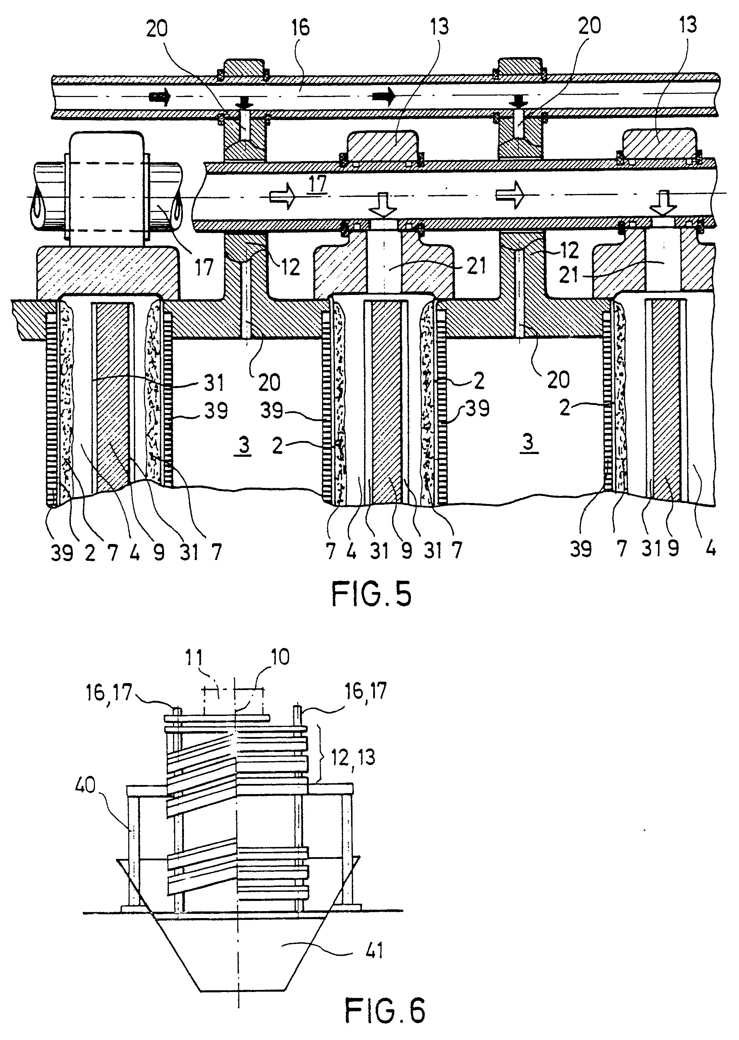

Die Kammerfilterpresse gemäß Fig. 4 und 5 unterscheidet sich von derjenigen nach Fig. 1 im wesentlichen nur dadurch, daß die Kammern 1 anders ausgebildet sind und zum Entfernen bzw. Ausräumen der Filterkuchen 7 anders geöffnet werden. Die Kammern 1 sind zu Paaren mit je einer gemeinsamen ersten Kammerplatte 12 zusammengefaßt, welche einen Hohlraum 3 zur Filtrataufnahme umschließt, der beiden Kammern 1 zugeordnet ist, und welche auf beiden Seiten jeweils ein den Hohlraum 3 abdeckendes Filtermittel 2 aufweist. Je zwei einander benachbarte erste Kammerplatten 12 sind von einer zweiten Kammerplatte 13 umschlossen, welche einen Hohlraum 4 zur Trübenaufnahme einschließt, der zwei Kammern 1 zugeordnet ist, nämlich den beiden einander benachbarten Kammern 1 zweier aneinander anschließender Kammerpaare, und in dem ein Rotor 9 angeordnet ist, welcher auf beiden Seiten auf die Trübe und die beiden Filterkuchen 7 in dem Hohlraum 4 einwirkt. In den zweiten Kammerplatten 13 an den beiden Enden der Kammerfilterpresse mit zwei Endplatten 14 mit unteren Standfüßen 15 braucht der jeweilige Rotor 9 dagegen nur einseitig zu wirken, wie bei den Rotoren 9 der Kammerfilterpresse gemäß Fig. 1 der Fall. Diese beiden zweiten Kammerplatten 13 sind auf der der zugehörigen ersten Kammerplatte 12 abgewandten Seite jeweils geschlossen.

Die Kammerfilterpresse gemäß Fig. 4 und 5 funktioniert genauso wie diejenige nach Fig. 1, abgesehen vom Öffnen und Schließen der Kammern 1. Das Öffnen der Kammern 1 geschieht in zwei Schritten, wobei erst die Kammern 1 einer ersten Gruppe und dann die Kammern 1 einer zweiten Gruppe gleichzeitig geöffnet werden, um die Filterkuchen 7 mittels der Rotoren 9 gleichzeitig aus den Hohlräumen 4 zur Trübenaufnahme zu entfernen, und zwar erst aus denjenigen der ersten und dann aus denjenigen der zweiten Gruppe von Kammern 1, nämlich der Gruppe von Kammern 1 auf der einen Seite der Rotoren 9 bzw. der Gruppe von Kammern 1 auf der anderen Seite der Rotoren 9. Dazu werden die ersten Kammerplatten 12 mittels des Antriebs 19 über das Joch 18 und die erste Verbindungsstange 16 simultan erst in einer Richtung und dann in umgekehrter Richtung bewegt, beispielsweise in Fig. 4 und 5 erst nach links und dann nach rechts, so daß sie aus der Schließstellung gemäß der rechten Hälfte von Fig. 4, in welcher die ersten Kammerplatten 12 gemäß Fig. 5 jeweils auf beiden Seiten von den beiden benachbarten zweiten Kammerplatten 13 übergriffen sind, in die erste Öffnungsstellung gemäß der linken Hälfte von Fig. 4, in welcher die ersten Kammerplatten 12 jeweils auf der einen, rechten Seite aus der benachbarten zweiten Kammerplatte 13 herausgezogen und auf der anderen, linken Seite in die benachbarte zweite Kammerplatte 13 hineingeschoben sind, bzw. in eine zweite Öffnungsstellung laufen, in welcher die ersten Kammerplatten 12 umgekehrt jeweils auf der anderen, linken Seite aus der benachbarten zweiten Kammerplatte 13 herausgezogen und auf der einen, rechten Seite in die benachbarte zweite Kammerplatte 13 hineingeschoben sind. Nach dem Filterkuchenentfernen bzw. -ausräumen werden die ersten Kammerplatten 12 dann wieder in die mittlere Schließstellung gemäß Fig. 5 gebracht. Wie bei der Kammerfilterpresse gemäß Fig. 1 ist auch bei derjenigen nach Fig. 4 und 5 eine kinematische Umkehrung dergestalt möglich, daß die ersten Kammerplatten 12 mit den Hohlräumen 3 zur Filtrataufnahme stationär und die zweiten Kammerplatten 13 mit den Hohlräumen 4 zur Trübenaufnahme beweglich angeordnet werden.

Gemäß Fig. 6 können die Kammerfilterpressen nach Fig. 1 bis 5 auch so angeordnet werden, daß die Rotorwelle 10 senkrecht verläuft. Die Standfüße 15 sind durch ein Gerüst 40 ersetzt, und es ist ein unterer Auslauftrichter 41 vorgesehen, in welchen hinein die Filterkuchen 7 ausgetragen werden. Während in der rechten Hälfte von Fig. 6 eine Kammerfilterpresse mit ebenen Kammerplatten 12 sowie 13, Filtermitteln 2 und Rotoren 9 veranschaulicht ist, wie auch aus Fig. 1 und 4, 5 ersichtlich, zeigt die linke Hälfte von Fig. 6 eine Kammerfilterpresse mit konischen Kammerplatten 12 sowie 13, Filtermitteln 2 und Rotoren 9, wie anhand der linken Hälfte von Fig. 3 erläutert.

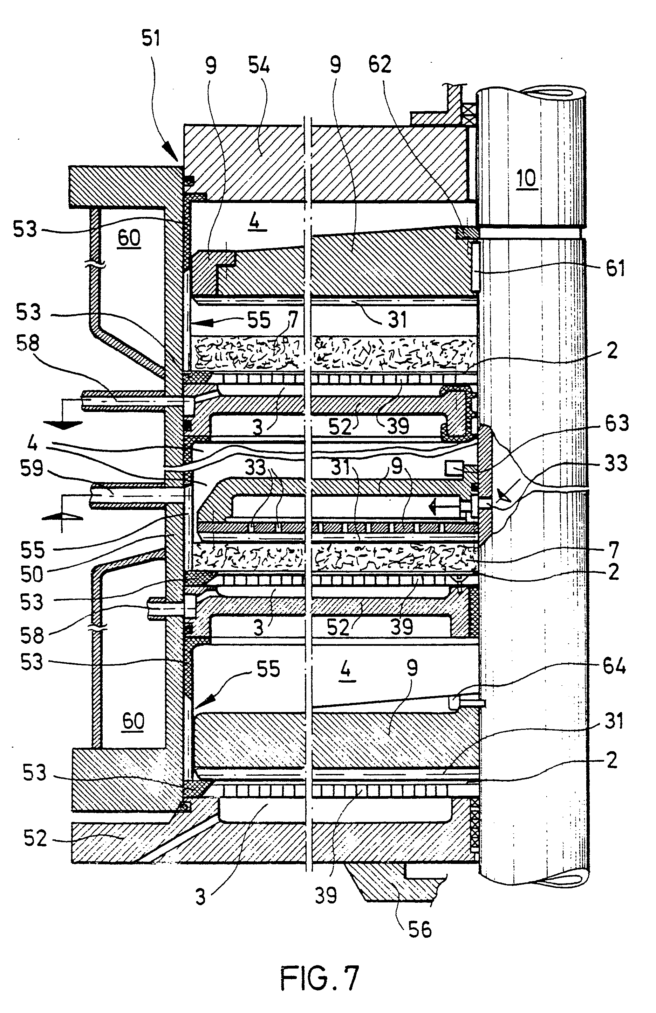

Bei den Kammerfilterpressen nach Fig. 7 bis 16 sind die Kammern 1 in einem gemeinsamen Kammergehäuse 50 vorgesehen und von einem Stapel 51 von Kammerplatten 52 und Distanzringen 53 gebildet. Die Kammerplatten 52 sind mit den Hohlräumen 3 zur Filtrataufnahme sowie den Filtermitteln 2 versehen, welche den Hohlraum 3 der jeweiligen Kammerplatte 52 abdecken. Die Distanzringe 53 sind jeweils zwischen zwei einander benachbarten Kammerplatten 52 bzw. an einem Ende des Stapels 51 zwischen einer Endplatte 54 und der benachbarten Kammerplatte 52 angeordnet, um die Hohlräume 4 zur Trübenaufnahme zu bilden, und mit seitlichen Filterkuchenausräumöffnungen 55 versehen. Das Kammergehäuse 50 und der Stapel 51 mit den in den Hohlräumen 4 zur Trübenaufnahme angeordneten Rotoren 9 sind auseinander-bewegbar, so daß die Kammern 1 gleichzeitig geöffnet und die Filterkuchen 7 mittels der Rotoren 9 aus den Hohlräumen 4 aller Kammern 1 gleichzeitig entfernt bzw. ausgeräumt und die Kammern 1 danach auch wieder gleichzeitig geschlossen werden können.

Die Kammerplatten 52 sind jeweils etwa in der Mitte von der Rotorwelle 10 senkrecht durchsetzt, welche hohl ausgebildet ist. Innerhalb der hohlen Rotorwelle 10 ist ein Zuganker 56 angeordnet, welcher die Kammerplatten 52, Distanzringe 53 und Endplatte 54 des Stapels 51 miteinander verspannt, wobei der Dreh- sowie Axialverschiebungsantrieb 11 der Rotorwelle 10 mit dem Stapel 51 verbunden ist. Das Kammergehäuse 50 und der Stapel 51 mit dem Dreh- sowie Axialverschiebungsantrieb 11 der Rotorwelle 10 sind mittels eines Antriebes 57 ähnlich dem Antrieb 19 der bereits geschilderten Kammerfilterpressen zwischen einer Schließstellung und einer Öffnungsstellung für die Filterkuchenausräumöffnungen 55 der Distanzringe 53 gegenseitig axial bewegbar, in welcher das Kammergehäuse 50 und der Stapel 51 aneinanderliegen bzw. voneinander entfernt sind.

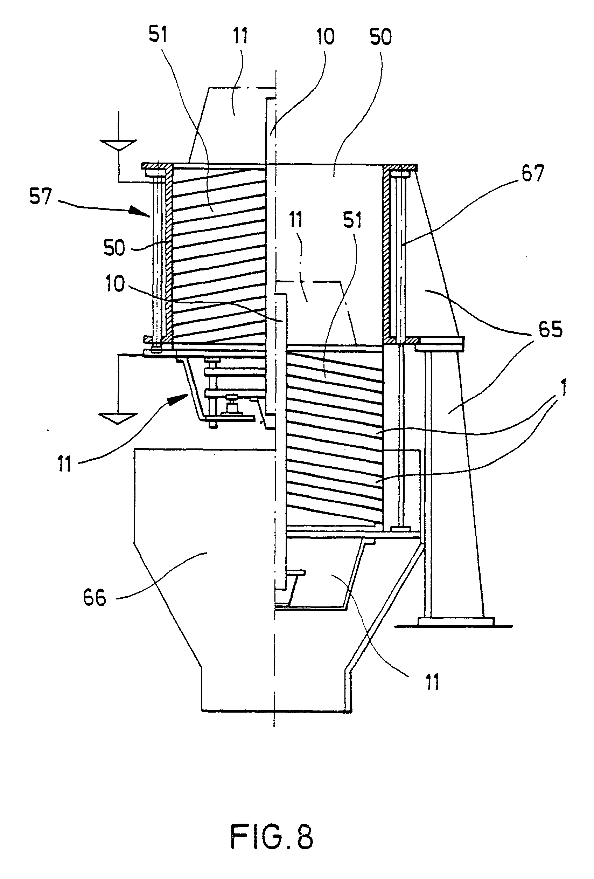

Das Kammergehäuse 50 und der Stapel 51 können zylindrisch oder konisch ausgebildet sein. Fig. 7 und 8 zeigen Kammerfilterpressen mit zylindrischem Kammergehäuse 50 und Stapel 51. Die zur mittleren Längsachse des Kammergehäuses 50 und des Stapels 51 koaxiale Rotorwelle 10 ist senkrecht angeordnet. Gemäß Fig. 7 greift der Zuganker 56 an der untersten Kammerplatte 52 des Stapels 51 an, ferner an der oberen Endplatte 54, um den Stapel 51 in sich zu verspannen. Die Endplatte 54, Kammerplatten 52 und Distanzringe 53 liegen am Außenumfang an der zylindrischen Innenfläche des Kammergehäuses 50 an, wobei zwischen letzterem und der Endplatte 54 sowie den Kammerplatten 52 geeignete Dichtungen angeordnet sind, ebenso wie zwischen letzteren und der Rotorwelle 10. Jeder Hohlraum 3 zur Filtrataufnahme ist über eine Filtratabzugsleitung 58 mit der Filtratabzugsleitung 6 oder dem Ventil 22 gemäß Fig. 1 verbunden, jeder Hohlraum 4 zur Trübenaufnahme über eine Trübezufuhrleitung 59 mit der Trübezufuhrleitung 5 oder dem Ventil 23 gemäß Fig. 1. Das Kammergehäuse 50 ist mit einer äußeren Heiz- und/oder Kühleinrichtung 60 versehen, welche von zwei mit einem gasförmigen oder flüssigen Heiz- bzw. Kühlmittel beaufschlagbaren Heiz- bzw. Kühlmänteln gebildet ist, so daß die Kammerfilterpresse genauso eingesetzt werden kann, wie die herkömmlichen Prozeßfilterapparate.

In Fig. 7 sind drei Kammern 1 gezeigt, wobei unterschiedliche Positionen und Ausbildungen der zugehörigen Rotoren 9 veranschaulicht sind. Bei der oberen Kammer 1 nimmt der Rotor 9 im zugehörigen Hohlraum 4 zur Trübenaufnahme eine Mittelstellung zwischen dem Filterkuchen 7 auf dem Filtermittel 2 und der Endplatte 54 ein und ist der Rotor 9 massiv ausgebildet sowie filterkuchenseitig mit sternförmig angeordneten Radialrippen 31 versehen und auf der anderen Seite konisch gestaltet. Bei der mittleren Kammer 1 liegt der zugehörige Rotor 9 auf dem benachbarten Filterkuchen 7 auf und ist er hohl ausgebildet sowie filterkuchenseitig zusätzlich zu den Radialrippen 31 mit Spritzöffnungen 32 versehen und über Verbindungsbohrungen 33 der hohlen Rotorwelle 10 mit einer geeigneten Flüssigkeit, vorzugsweise Wasser, zum Filterkuchen- und/oder Filtermittelwaschen und/oder mit einem gasförmigen Druckmittel, vorzugsweise Druckluft, zur weiteren Filterkuchenentfeuchtung beaufschlagbar. Bei der unteren Kammer 1 erstreckt sich der zugehörige Rotor 9 unmittelbar oberhalb des Filtermittels 2 dieser Kammer 1, wie zu Beginn einer Filterperiode oder nach dem Filterkuchenentfernen bzw. -ausräumen der Fall, wenn ein Filterkuchen 7 noch nicht bzw. nicht mehr vorhanden ist. Der Rotor 9 ist massiv ausgebildet sowie filterkuchenseitig mit Radialrippen 31 versehen und unterscheidet sich vom Rotor 9 der oberen Kammer 1 im wesentlichen nur durch die unterschiedliche Längsschnittform sowie dadurch, daß er einstückig ausgebildet ist, während der Rotor 9 der oberen Kammer 1 aus zwei Teilen besteht und einen lösbar befestigten Außenring 9' aufweist, der aus Ringsegmenten bestehen kann.

Weiterhin gehen aus Fig. 7 verschiedene Möglichkeiten zur Befestigung der Rotoren 9 auf der Rotorwelle 10 hervor. Demgemäß können die Rotoren 9 jeweils mit Hilfe eines Keils 61 und eines geteilten Ringes 62 oder mittels eines Schrumpfringes 63 oder mit Hilfe von Befestigungsschrauben 64 drehfest mit der Rotorwelle 10 verbunden werden.

In Fig. 7 befinden sich das Kammergehäuse 50 und der Stapel 51 in derjenigen Relativstellung, in welcher die Kammern 1 bzw. die Filterkuchenausräumöffnungen 55 der Distanzringe 53 geschlossen sind. Das Kammergehäuse 50 und der Stapel 51 liegen aneinander bzw. sind ineinander gesteckt. Um die Kammern 1 zu öffnen bzw. die Filterkuchenausräumöffnungen 55 freizugeben, werden das Kammergehäuse 50 und der Stapel 51 aus der Schließstellung gemäß Fig. 7 gegenseitig axial in eine Öffnungsstellung bewegt, in welcher das Kammergehäuse 50 und der Stapel 51 voneinander entfernt, also auseinandergezogen sind, wie in Fig. 8 veranschaulicht. In dieser Öffnungsstellung können auch die Filtermittel 2 ausgewechselt werden, wie noch geschildert.

Gemäß Fig. 8 ruht das Kammergehäuse 50 auf einem Gerüst 65, an welchem ein unterer Auslauftrichter 66 für die ausgeräumten Filterkuchen 7 angebracht ist. Zwischen dem Kammergehäuse 50 oder dem Gerüst 65 und dem Stapel 51 sind mehrere hydraulische Arbeitszylinder 67 vorgesehen, welche um die Rotorwelle 10 herum gleichmäßig verteilt sind und den Antrieb 57 bilden, mittels welchem der Stapel 51 bezüglich des Kammergehäuses 50 in die Öffnungsstellung und die Schließstellung für die Kammern 1 bzw. die Filterkuchenausräumöffnungen 55 der Distanzringe 53 axial bewegt wird. Die Öffnungsstellung ist in der rechten Hälfte von Fig. 8 wiedergegeben, die Schließstellung in der linken Hälfte von Fig. 8. Daraus geht auch hervor, daß die Kammerplatten 52, Distanzringe 53, Filtermittel 2 und Rotoren 9 derart konisch ausgebildet sein können, wie anhand der linken Hälfte von Fig. 3 erörtert, und daß der Dreh- sowie Axialverschiebungsantrieb 11 der Rotorwelle 10 unterhalb oder oberhalb des Stapels 51 angeordnet werden kann, wie mit ausgezogenen bzw. strichpunktierten Linien angedeutet. Auch ist eine kinematische Umkehrung dergestalt möglich, daß der Stapel 51 stationär angeordnet und mit dem Gerüst 65 verbunden wird, während das Kammergehäuse 50 beweglich angeordnet und mittels des Antriebes 57 axial bewegt wird, was den Vorteil vermittelt, daß die zu bewegende Last geringer ist.

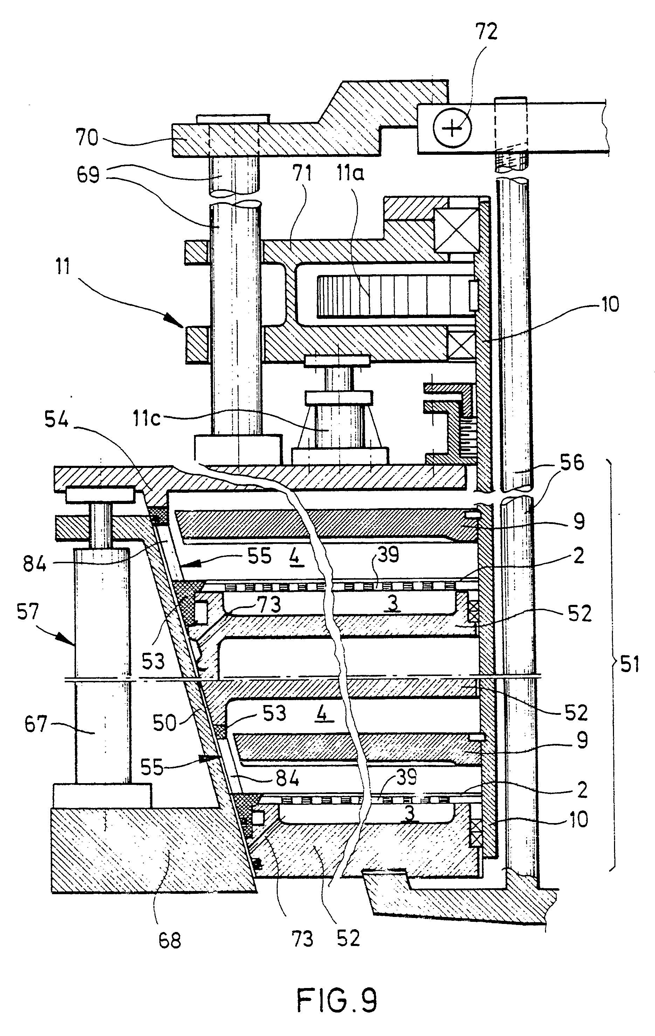

Die Kammerfilterpressen nach Fig. 9 bis 16 unterscheiden sich im wesentlichen dadurch von derjenigen nach Fig. 7 und 8, daß das Kammergehäuse 50 und der Stapel 51 konisch ausgebildet sind, so daß es zum gleichzeitigen Öffnen aller Kammern 1 bzw. der Filterkuchenausräumöffnungen 55 aller Distanzringe 53 nicht erforderlich ist, das Kammergehäuse 50 und den Stapel 51 vollständig auseinanderzuziehen, sondern vielmehr ausreicht, sie um eine verhältnismäßig geringe Strecke gegenseitig axial zu bewegen. Gemäß Fig. 9 sind die hydraulischen Arbeitszylinder 67 des Antriebs 57 zwischen der oberen Endplatte 54 des Stapels 51 und einem unteren Außenflansch 68 des Kammergehäuses 50 vorgesehen. Auf der Endplatte 54 sind mehrere Führungssäulen 69 befestigt, welche um die Rotorwelle 10 herum gleichmäßig verteilt sind, ein Joch 70 tragen und ein Gehäuse 71 für das Zahnrad 11a des Drehsowie Axialverschiebungsantriebs 11 führen. Letzterer weist ferner mehrere hydraulische Arbeitszylinder 11c statt des Gewinderades 11b auf, welche zwischen der Endplatte 54 und dem mit der Rotorwelle 10 drehbar, jedoch axial fest verbundenem Gehäuse 71 angeordnet und um die Rotorwelle 10 herum gleichmäßig verteilt sind. Das Joch 70 ist mit den Führungssäulen 69 fest verbunden und mit einem Antrieb 72 für den Zuganker 56 versehen, mittels welchem der Zuganker 56 zwischen zwei Stellungen axial bewegbar ist, in welchen er den Stapel 51 verspannt bzw. der Stapel 51 gelöst ist, wie noch geschildert.

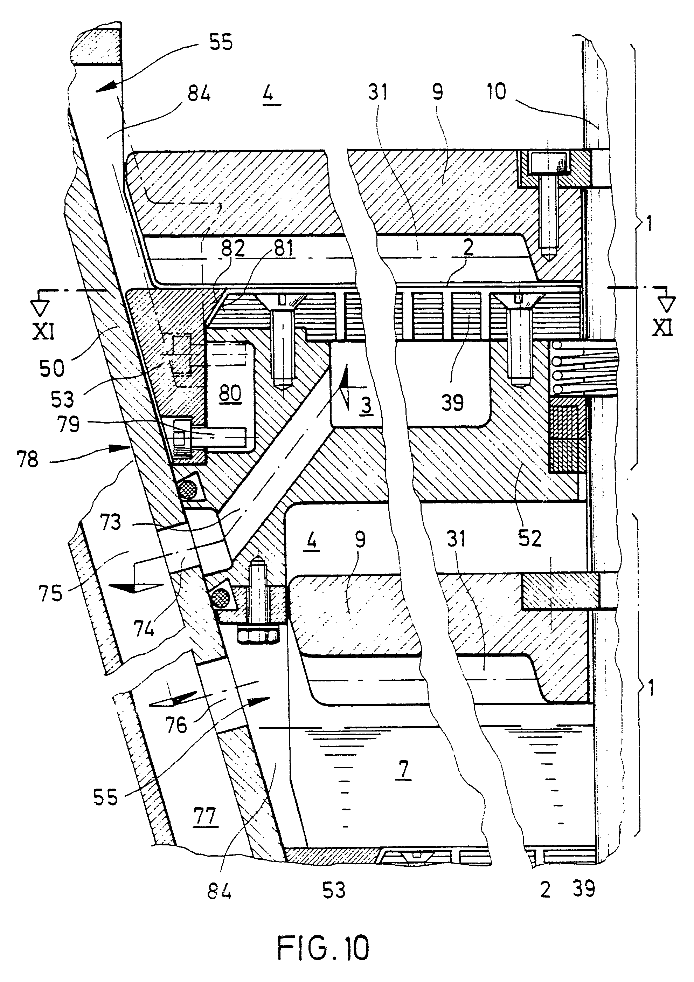

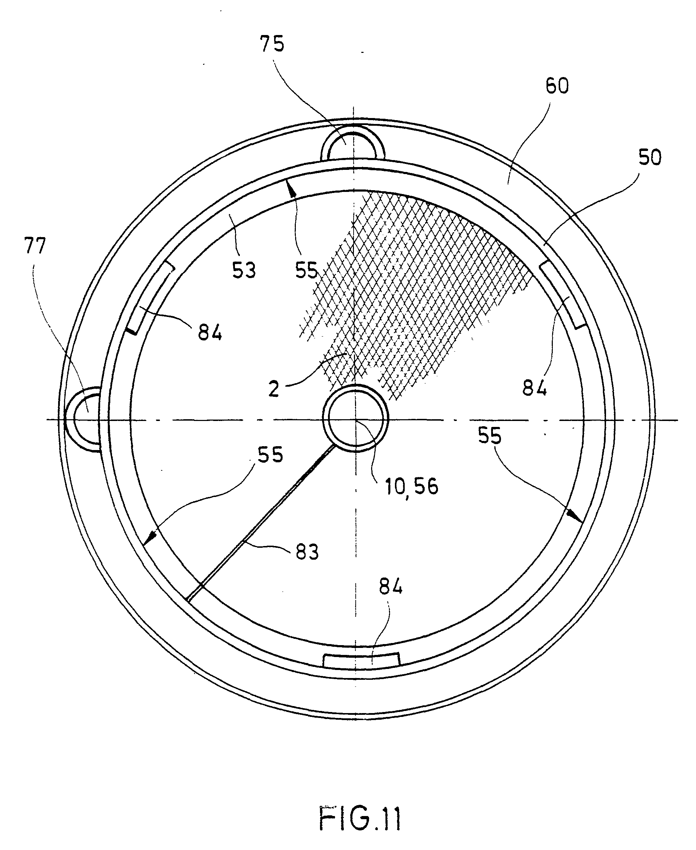

Gemäß Fig. 10 und 11 stehen die Hohlräume 3 zur Filtrataufnahme der Kammerplatten 52 jeweils über einen Plattenkanal 73 und eine Durchgangsbohrung 74 des Kammergehäuses 50 mit einem gemeinsamen Filtratabzugskanal 75 in Verbindung, welcher außen am Kammergehäuse 50 entlangläuft und an die Filtratabzugsleitung 6 oder das Ventil 22 gemäß Fig. 1 angeschlossen ist. Auch die Hohlräume 4 zur Trübenaufnahme zwischen den Kammerplatten 52 sind jeweils über eine der Filterkuchenausräumöffnungen 55 sowie eine Durchgangsbohrung 76 des Kammergehäuses 50 mit einem gemeinsamen Trübezufuhrkanal 77 verbunden, welcher außen am Kammergehäuse 50 entlangläuft und an die Trübezufuhrleitung 5 oder das Ventil 23 gemäß Fig. 1 angeschlossen ist.

Zum Öffnen der Kammern 1 bzw. der Filterkuchenausräumöffnungen 55 der Distanzringe 53 wird der Stapel 51 aus der Schließstellung gemäß Fig. 9 und 10 mittels des Antriebs 57 angehoben, worauf die Rotoren 9 betätigt werden können, um die Filterkuchen 7 von den Filtermitteln 2 zu entfernen und aus den Hohlräumen 4 zur Trübenaufnahme in den zwischen dem Kammergehäuse 50 und dem Stapel 51 gebildeten Ringraum hinein auszuräumen, in welchem sie nach unten rutschen. Danach kann der Stapel 51 wieder in die Schließstellung für die Kammern 1 bzw. die Filterkuchenausräumöffnungen 55 der Distanzringe 53 abgesenkt und in Anlage an das Kammergehäuse 50 gebracht werden, in Fig. 9 und 10 dargestellt, in welchen im übrigen für die Kammern 1 wiederum unterschiedliche Rotorpositionen bzw. Zustände veranschaulicht sind.

In Fig. 10 ist der Filtratabzugskanal 75 gegenüber der Darstellung in Fig. 11 um 90° in Umfangsrichtung des Kammergehäuses 50 versetzt eingezeichnet. Es können auch mehr Filtratabzugskanäle 75 und Trübezufuhrkanäle 77 außen am Kammergehäuse 50 vorgesehen sein, als in Fig. 11 wiedergegeben.

Zum leichten Auswechseln der Filtermittel 2 sind zwischen den Kammerplatten 52 und den Distanzringen 53 Halter 78 vorgesehen. Gemäß Fig. 10 sind die Halter 78 von Schrauben 79 gebildet, welche in jeden Distanzring 53, der an der jeweils oben benachbarten Kammerplatte 52 befestigt ist, abgesehen vom obersten Distanzring 53, der an die Endplatte 54 angeschraubt ist, am unteren Ende desselben seitlich eingeschraubt sind und seitlich in eine Umfangsausnehmung 80 der jeweils unten benachbarten Kammerplatte 52 ragen. Die Filtermittel 2 sind jeweils am Außenumfang zwischen einer konischen Fläche 81 der zugehörigen unteren Kammerplatte 52 bzw. der daran befestigten Stützplatte 39 für das jeweilige Filtermittel 2 und einer entsprechend konischen Fläche 82 des benachbarten Distanzringes 53 eingeklemmt und gemäß Fig. 11 mit einem Radialschlitz 83 versehen. Aus Fig. 11 geht auch hervor, daß die Distanzringe 53 jeweils im mittleren Bereich drei Stege 84 aufweisen, welche sich zwischen den jeweiligen Filterkuchenausräumöffnungen 55 am Kammergehäuse 50 entlang erstrecken, und daß das Kammergehäuse 50 mit der geschilderten Heiz- und/oder Kühleinrichtung 60 versehen sein kann.

Um die Filtermittel 2 auszuwechseln genügt es, den Stapel 51 mittels des Antriebes 57 vollständig aus dem Kammergehäuse 50 herauszuheben und die Verspannung des Stapels 51 zu lösen, nämlich den Antrieb 72 des Zugankers 56 einzuschalten, so daß letzterer nach unten läuft, was zur Folge hat, daß der Stapel 51 sich öffnet und die Kammerplatten 52 sowie die Distanzringe 53 um eine bestimmte Strecke auseinanderlaufen, bis die Halter 78 wirksam werden, nämlich die Schrauben 79 jedes Distanzringes 53 an der oberen Seitenfläche der Umfangsausnehmung 80 der jeweils unten benachbarten Kammerplatte 52 anliegen, wie in Fig. 10 mit strichpunktierten Linien angedeutet. Dann haben die konischen Flächen 82 der Distanzringe 53 von den damit zusammenwirkenden konischen Flächen 81 abgehoben und ist die Verklemmung der Filtermittel 2 am jeweiligen Außenumfang gelöst, so daß sie entfernt und durch neue Filtermittel 2 ersetzt werden können, was infolge des jeweiligen Radialschlitzes 83 ohne weiteres möglich ist. Die neuen Filtermittel 2 werden einfach dadurch fixiert, daß der Zuganker 56 mittels des Antriebes 72 in umgekehrter Richtung betätigt und der Stapel 51 wieder verspannt wird. Anschließend kann er mit Hilfe des Antriebes 57 wieder in das Kammergehäuse 50 hinein abgesenkt werden.

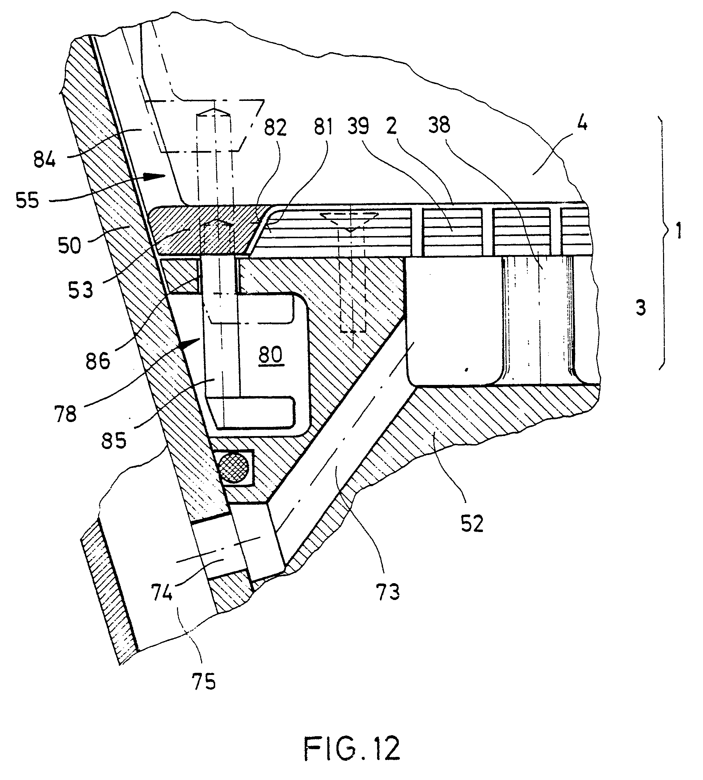

Gemäß Fig. 12 ist es auch möglich, jeden Distanzring 53 statt mit den seitlichen Schrauben 79 mit Hammerschrauben 85 zu versehen, welche die Halter 78 bilden, in den jeweiligen Distanzring 53 von unten eingeschraubt sind und von oben in die Umfangsausnehmung 80 der jeweils unten benachbarten Kammerplatte 52 durch eine Bohrung 86 derselben hindurch ragen, um beim geschilderten Stapellösen mit ihren Hammerköpfen mit der oberen Seitenfläche der Umfangsausnehmung 80 zusammenzuwirken, wie in Fig. 12 mit strichpunktierten Linien angedeutet.

Analog den Verbindungsstangen 16 und 17 der Kammerfilterpresse gemäß Fig. 1 kann auch der Zuganker 56 hohl ausgebildet und mit Verbindungsbohrungen versehen sein, wobei diese allerdings in die hohle Rotorwelle 10 führen, die ihrerseits mit den geschilderten Verbindungsbohrungen 33 zu den hohlen Rotoren 9 bzw. analog den Verbindungsstangen 16 und 17 mit Verbindungsbohrungen zu den Hohlräumen 3 zur Filtrataufnahme der Kammerplatten 52 bzw. mit Verbindungsbohrungen zu den Hohlräumen 4 zur Trübenaufnahme zwischen den Kammerplatten 52 versehen wird, so daß es möglich ist, den hohlen Zuganker 56 mit der Waschflüssigkeit bzw. dem Druckmittel für die hohlen Rotoren 9 zu beaufschlagen, wie in Verbindung mit Fig. 7 geschildert, bzw. mit der Filtratabzugsleitung 6 oder dem Ventil 22 gemäß Fig. 1 bzw. der Trübezufuhrleitung 5 oder dem Ventil 23 gemäß Fig. 1 zu dem in Verbindung damit erläuterten Zweck zu verbinden.

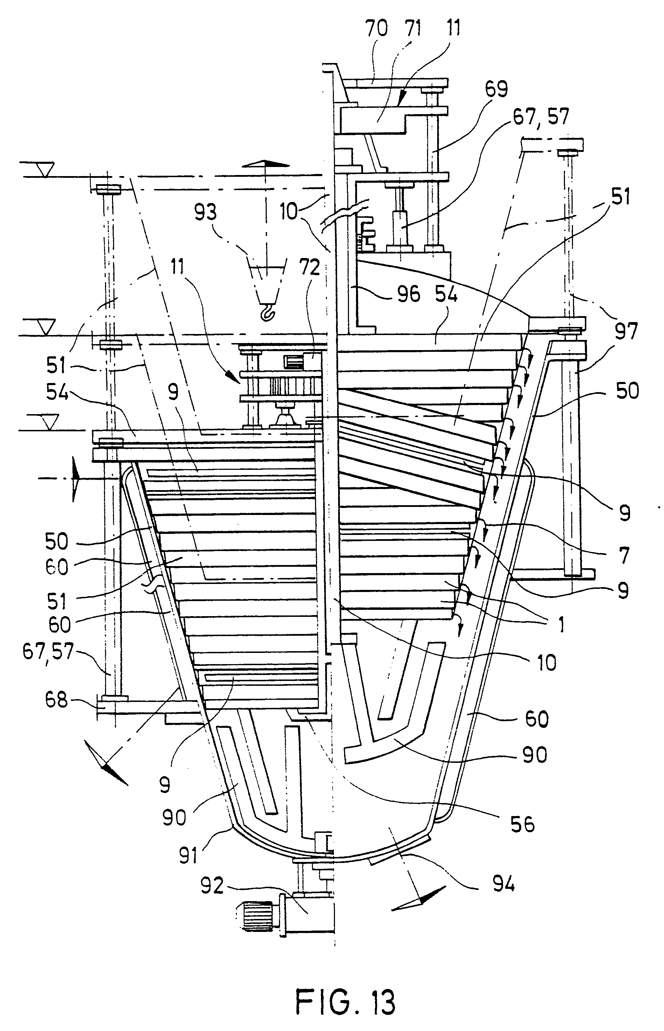

Fig. 13 zeigt in der linken Hälfte eine Kammerfilterpresse ähnlich derjenigen gemäß Fig. 9 bis 12, welche zusätzlich zu der den Stapel 51 umschließenden Heiz- und/oder Kühleinrichtung 60 außen am Kammergehäuse 50 auf einer Seite, nämlich unterhalb des Stapels 51 ein Rührwerk 90 aufweist, das in einem am Kammergehäuse 50 angebrachten, konischen Topf 91 eingeschlossen und mit einem Antrieb 92 versehen ist sowie dazu dient, die ausgeräumten Filterkuchen 7 im Topf 91 zu rühren und zu kneten, in welchem die Feststoffe der Filterkuchen 7 vollständig getrocknet werden können, wozu der Topf 91 mit einer äußeren Heizeinrichtung versehen werden kann. Auch ist es möglich, die besagten Feststoffe in dem Topf 91 mittels einer geeigneten Kühleinrichtung zu kühlen und/oder sonstwie zu behandeln, so daß die Kammerfilterpresse gemäß der linken Hälfte von Fig. 13 wie die herkömmlichen Prozeßfilterapparate eingesetzt werden kann, denen gegenüber sie allerdings eine wesentlich größere Kapazität aufweist, und zwar schon aufgrund der wesentlich größeren Filterfläche infolge der Vielzahl von Filtermitteln 2. Wie eingangs erwähnt, weisen die üblichen Prozeßfilterapparate nur ein einziges den Querschnitt des Innenraumes abdeckendes Filtermittel auf, um die Feststoffe aus der jeweiligen Trübe im Wege einer reinen Oberflächenfiltration abzutrennen.

In der linken Hälfte von Fig. 13 sind das Kammergehäuse 50 und der Stapel 51 mit ausgezogenen Linien in der Schließstellung für die Kammern 1 bzw. die Filterkuchenausräumöffnungen 55 der Distanzringe 53 dargestellt und diejenigen beiden Stellungen des Stapels 51 mit strichpunktierten Linien angedeutet, in welche er zum Filterkunentfernen bzw. -ausräumen im Kammergehäuse 50 bzw. zum Filtermittelauswechseln aus dem Kammergehäuse 50 heraus angehoben wird, und zwar mittels des Antriebes 57. Statt dessen kann auch ein Kran mit einem Kranhaken 93 verwendet werden, wie in der linken Hälfte von Fig. 13 mit strichpunktierten Linien augedeutet. Auch ist die bereits geschilderte kinematische Umkehrung dergestalt möglich, daß der Stapel 51 stationär und das Kammergehäuse 50 beweglich angeordnet wird.

In der rechten Hälfte zeigt Fig. 13 eine Kammerfilterpresse in der Öffnungsstellung für die Kammern 1 bzw. die Filterkuchenausräumöffnungen 55 der Distanzringe 53, welche sich von derjenigen nach der linken Hälfte von Fig. 13 im wesentlichen nur dadurch unterscheidet, daß das konische Kammergehäuse 50 vollkommen geschlossen ausgebildet ist und den konischen Stapel 51 auch bei geöffneten Kammern 1 bzw. in der Öffnungsstellung für die Filterkuchenausräumöffnungen 55 der Distanzringe 53 einschließt, ferner das Rührwerk 90 an der Rotorwelle 10 angebracht ist, so daß der Antrieb 92 nicht erforderlich ist. Statt den Topf 91 vorzusehen, ist das Kammergehäuse 50 im unteren Bereich des Stapels 51 topfförmig ausgebildet und mit einer Entnahmeöffnung 94 versehen, wobei die Heiz- und/oder Kühleinrichtung 60 auch den topfförmigen Bereich des Kammergehäuses 50 außen umschließt.

Diese Kammerfilterpresse ist ganz besonders vorteilhaft als Prozeßfilterapparat einsetzbar, weil auch dann, wenn die Filterkuchen 7 aus den Kammern 1 entfernt bzw. ausgeräumt werden, keine Substanzen aus dem vollkommen geschlossenen Kammergehäuse 50 in die umgebende Atmosphäre austreten können, wie in der rechten Hälfte von Fig. 13 veranschaulicht, und selbst die ausgeräumten Filterkuchen 7 im Kammergehäuse 50 noch weiterbehandelt werden können, ohne daß Substanzen in die Umgebungsatmosphäre gelangen können, um das Kammergehäuse 50 erst dann zu verlassen, wenn eine Umweltverschmutzung nicht mehr zu befürchten ist. Dieses ist von ganz besonderer Bedeutung dann, wenn giftige oder sonstwie schädliche Trüben gefiltert werden.

Gemäß der rechten Hälfte von Fig. 13 weist das Kammergehäuse 50 einen gewölbten Deckel 95 auf, welcher nicht nur die Führungssäulen 69 mit dem Joch 70 trägt, auf denen der Dreh- sowie Axialverschiebungsantrieb 11 der Rotorwelle 10 bzw. das Gehäuse 71 desselben geführt ist, sondern vielmehr auch noch die hydraulischen Arbeitszylinder 67 des Antriebes 57, welche an einer Hülse 96 angreifen, die die Rotorwelle 10 umschließt, den Deckel 95 durchsetzt und ebenfalls auf den Führungssäulen 69 geführt, an der Endplatte 54 des Stapels 51 befestigt sowie sowohl gegenüber der Rotorwelle 10 als auch gegenüber dem Deckel 95 abgedichtet ist. Mittels der hydraulischen Arbeitszylinder 67 kann die Hülse 96 im Deckel 95 axial hin- und herbewegt werden, um den Stapel 51 in die dargestellte Öffnungsstellung für die Kammern 1 bzw. die Filterkuchenausräumöffnungen 55 der Distanzringe 53 anzuheben bzw. in die Schließstellung abzusenken, in welcher der Stapel 51 am Kammergehäuse 50 anliegt. Der Dreh- sowie Axialverschiebungsantrieb 11 ist mit der Hülse 96 verbunden. Falls auf den Führungssäulen 69 das Gehäuse 71 geführt ist, dann sind zwischen demselben und der Hülse 96 die hydraulischen Arbeitszylinder 11c gemäß Fig. 9 angeordnet.

Um den Stapel 51 zum Filtermittelauswechseln in die in der rechten Hälfte von Fig. 13 mit strichpunktierten Linien angegebene Stellung anheben zu können, sind gesonderte hydraulische Arbeitszylinder 97 vorgesehen. Bei dieser Bewegung des Stapels 51 wird der Deckel 95 des Kammergehäuses 50 mitgenommen, wozu zuvor die gegenseitige Verriegelung gelöst werden muß. Wiederum ist auch diejenige kinematische Umkehrung möglich, daß der Deckel 95 stationär und das Kammergehäuse 50 geweglich angeordnet wird, um durch die hydraulischen Arbeitszylinder 97 axial bewegt zu werden.

Ferner ist in der rechten Hälfte von Fig. 13 auch angedeutet, daß die Kammerplatten 52, Distanzringe 53, Filtermittel 2 und Rotoren 9 statt eben auch konisch ausgebildet sein können, wie in Verbindung mit der linken Hälfte von Fig. 3 erläutert.

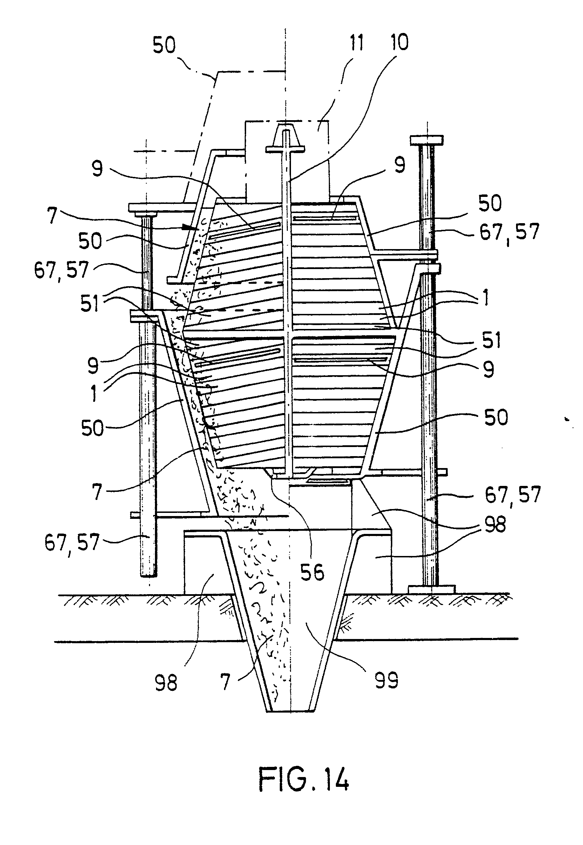

Fig. 14 veranschaulicht eine Kammerfilterpresse mit einem zweiteiligen, doppelkonischen Kammergehäuse 50 und einem doppelkonischen Stapel 51, welcher stationär angeordnet ist und auf einem Gerüst 98 mit einem Auslauftrichter 99 für die aus den Kammern 1 entleerten bzw. ausgeräumten Filterkuchen 7 abgestützt ist. Die beiden Hälften des Kammergehäuses 50 sind mittels der um die Rotorwelle 10 gleichmäßig verteilten hydraulischen Arbeitszylinder 67 des Antriebes 57 bezüglich des Stapels 51 axial bewegbar, um die Kammern 1 desselben bzw. die Filterkuchenausräumöffnungen 55 der Distanzringe 53 zu öffnen und zu schließen. Dabei kann die untere Hälfte des Kammergehäuses 50 gemäß der rechten Hälfte von Fig. 14 so ausgebildet sein, daß sie die obere Hälfte übergreift. Die hydraulischen Arbeitszylinder 67 können gemäß der linken Hälfte von Fig. 14 am Gerüst 98 befestigt sein, wobei eine Gruppe an der unteren Hälfte und eine andere Gruppe an der oberen Hälfte des Kammergehäuses 50 angreift, oder aber gemäß der rechten Hälfte von Fig. 14 mit einer Gruppe auf dem Boden abgestützt sein und an der unteren Hälfte des Kammergehäuses 50 angreifen, während die andere Gruppe an der oberen Hälfte des Kammergehäuses 50 befestigt ist und gleichfalls an der unteren Hälfte des Kammergehäuses 50 angreift.

Während in der rechten Hälfte von Fig. 14 eine Kammerfilterpresse mit ebenen Kammerplatten 52. Distanzringen 53, Filtermitteln 2 und Rotoren 9 veranschaulicht ist, ist in der linken Hälfte von Fig. 14 eine Kammerfilterpresse mit konischen Kammerplatten 52, Distanzringen 53, Filtermitteln 2 und Rotoren 9 wiedergegeben, wie in Verbindung mit der linken Hälfte von Fig. 3 erläutert. In der rechten Hälfte von Fig. 14 befinden sich das Kammergehäuse 50 und der Stapel 51 in der Schließstellung für die Kammern 1 bzw. die Filterkuchenausräumöffnungen 55 der Distanzringe 53, während sie in der linken Hälfte von Fig. 14 die Öffnungsstellung einnehmen und die Filterkuchen 7 ausgeräumt werden, welche in den Auslauftrichter 99 fallen. Diejenige Stellung, in welche die obere Hälfte des Kammergehäuses 50 mittels der hydraulischen Arbeitszylinder 67 des Antriebes 57 zum Filtermittelauswechseln angehoben wird, ist dort mit strichpunktierten Linien angedeutet.

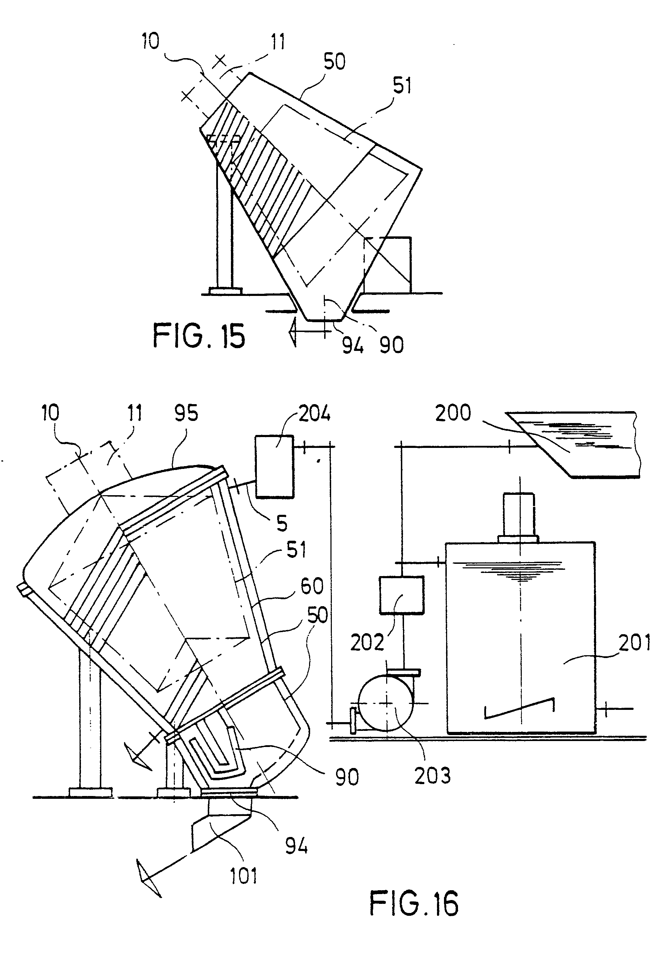

Fig. 15 zeigt eine Kammerfilterpresse, welche sich im wesentlichen nur dadurch von derjenigen nach der rechten Hälfte von Fig. 13 unterscheidet, daß die Rotorwelle 10 schräg und das Kammergehäuse 50 stationär angeordnet ist, ferner der Dreh- sowie Axialverschiebungsantrieb 11 der Rotorwelle 10 auf dem Ende geringeren Durchmessers des Kammergehäuses 50 vorgesehen ist, wobei das Rührwerk 90 mit zum Boden, auf welchem das Kammergehäuse 50 abgestützt ist, senkrechter Drehachse in dem unteren Bereich des Kammergehäuses 50 angeordnet ist, welcher dementsprechend ausgebildet ist, und zwar wiederum topfförmig und konisch sowie mit der unteren Entnahmeöffnung 94. Der Stapel 51 ist aus der mit ausgezogenen Linien wiedergegebenen Schließstellung in die mit strichpunktierten Linien angedeutete Öffnungsstellung für die Kammern 1 bzw. die Filterkuchenausräumöffnungen 55 der Distanzringe 53 und umgekehrt auf die geschilderte Art und Weise axial bewegbar.

Fig. 16 zeigt die Kammerfilterpresse gemäß der rechten Hälfte von Fig. 13 in schräger Anordnung analog derjenigen gemäß Fig. 15, wobei an die Entnahmeöffnung 94 des Kammergehäuses 50 eine Auslaufrutsche 101 für die ausgeräumten Filterkuchen 7 bzw. deren Feststoffe angeschlossen und das Kammergehäuse 50 an dem das Rührwerk 90 aufnehmenden Ende als Verdampfer bzw. Trockner für die ausgeräumten Filterkuchen 7 bzw. deren Feststoffe ausgebildet sowie mit einer äußeren Heizeinrichtung 60 versehen ist. Die Öffnungsstellung des Stapels 51 im Kammergehäuse 50, in welcher die Kammern 1 bzw. die Filterkuchenausräumöffnungen 55 der Distanzringe 53 geöffnet sind und die Filterkuchen 7 entfernt bzw. ausgeräumt werden können, ist mit strichpunktierten Linien angedeutet.

Die Kammerfilterpresse gemäß Fig. 16 ist an ein Schlammbecken 200 einer Abwasserkläranlage oder einen Suspensionsbehälter 201 zur Behandlung einer Trübe bzw. Aufbereitung der Feststoffe derselben angeschlossen, und zwar über einen Abscheider 202 für Metallteilchen oder sonstige Festkörper, eine Trübepumpe 203 und ein Konditionierungsgefäß 204, in welchem der Trübe geeignete Filterungshilfsmittel dosiert zugesetzt werden, die dann in die Trübezufuhrleitung 5 gelangt.

Die Kammerfilterpressen gemäß Fig. 7 bis 16 können gewünschtenfalls auch mit waagerechter Rotorwelle 10 angeordnet werden, ebenso wie es möglich ist, die Kammerfilterpressen nach Fig. 1 bis 6 im Bedarfsfalle schräg anzuordnen, also mit gegenüber dem Boden geneigter Rotorwelle 10. Auch ist es bei den Kammerfilterpressen nach Fig. 7 bis 16 besonders einfach möglich, die Hohlräume 3 zur Filtrataufnahme der Kammerplatten 52 und/oder die Hohlräume 4 zur Trübenaufnahme zwischen den Kammerplatten 52 mit einem gasförmigen Sterilisationsmittel, vorzugsweise Wasserdampf, zu beaufschlagen.

Die erfindungsgemäße Kammerfilterpresse kann zumindest überall dort eingesetzt werden, wo herkömmliche Kammerfilterpressen bzw. Prozeßfilterapparate Verwendung finden. Bei der letztgenannten Anwendung ist im übrigen auch vorteilhaft, daß die bei den üblichen Prozeßfilterapparaten zum Filterkuchenentleeren in der Regel erforderlichen, aufwendigen Schwenkmechanismen in Wegfall kommen.

**Patentansprüche**

1. Kammerfilterpresse mit mehreren parallel zueinander angeordneten Kammern (1), von denen jede zu beiden Seiten eines Filtermittels (2) je einen Hohlraum (4,3) etwa kreisförmigen Querschnitts zur Aufnahme von Trübe bzw. Filtrat aufweist, und mit Rotoren (9), von denen jeweils einer in einem der Trübehohlräume (4) angeordnet ist und die auf einer gemeinsamen Rotorwelle (10) drehfest angebracht sind, die die Hohlräume (4,3) und die Filtermittel (2) zentrisch durchsetzt, wobei die Filtrathohlräume (3) jeweils in einer von dem Filtermittel (2) überspannten ersten Kammerplatte (15 ; 52) und die Trübehohlräume (4) jeweils von einer den Rotor (9) aufnehmenden zweiten Kammerplatte (13 ; 53,50) begrenzt sind, dadurch gekennzeichnet, daß die ersten Kammerplatten (12) an wenigstens einer gemeinsamen ersten Verbindungsstange (16) und die zweiten Kammerplatten (13) an wenigstens einer gemeinsamen zweiten Verbindungsstange (17) befestigt sind, die sich parallel zur Rotorwelle (10) erstrecken, die beiden Verbindungsstangen (16,17) in axialer Richtung gegeneinander verschiebbar sind, um die Trübehohlräume (4) durch gegenseitige axiale Verschiebung der ersten und zweiten Kammerplatten (12,13) gleichzeitig zu öffnen bzw. zu schließen, daß die Rotoren (9) jeweils scheibenförmig sind und auf der dem Filtermittel (2) zugewandten Seite mit wenigstens einer axial vorstehenden Rippe (31) versehen sind, die sich vom Mittenbereich zum Umfang des Rotors (9) erstreckt, daß die Rotoren zum Trübebewegen sowie rührenden und pressenden Filterkuchen kneten beim Filtern und zum Filterkuchen pressen sowie -entfernen nach dem Filtern ausgebildet sind und daß die Rotorwelle (10) mit den Rotoren (9) in axialer Richtung verschiebbar in der Filterpresse gelagert ist und mit einem Dreh- sowie Axialverschiebungsantrieb verbunden ist.

2. Kammerfilterpresse nach Anspruch 1, dadurch gekennzeichnet, daß die Kammern (1) jeweils paarweise zusammengefaßt sind, indem zwei einander benachbarte Kammern (1) eine gemeinsame erste Kammerplatte (12) haben, die beidseitig von Filtermittel (2) überspannt ist und einen beiden Kammern (1) gemeinsamen Filtrathohlraum (3) umschließt, und die sich beidseitig daran anschließenden Trübehohlräume (4) mit denen von den beiden, sich an die erstgenannten Kammern (1) beidseitig anschließenden Kammern (1) gemeinsam sind, mit einem einzigen Rotor (9) in dem jeweils zwei Kammern (1) gemeinsamen Trübehohlraum (4), und daß die Außenumfangswände der ersten Kammerplatten (12) jeweils an den Innenumfangswänden der zweiten Kammerplatten (13) dichtend anliegen und gegeneinander so verschiebbar sind, daß durch axiale Verschiebung die ersten Kammerplatten (12) jeweils gleichzeitig in die jeweils zugehörigen zweiten Kammerplatten (13) tiefer eintreten bzw. von diesen völlig freikommen können.

3. Kammerfilterpresse nach einem der Ansprüche 1 oder 2, dadurch gekennzeichnet, daß die Rotoren (9) jeweils hohl ausgebildet, filtermittelseitig mit Spritzöffnungen (32) versehen und mit einer Flüssigkeit, vorzugsweise Wasser, zum Filterkuchen und/oder Filtermittelwaschen und/oder mit einem gasförmigen Druckmittel, vorzugsweise Druckluft, zur weiteren Filterkuchenentfeuchtung beaufschlagbar sind.

4. Kammerfilterpresse nach einem der Ansprüche 1 bis 3, dadurch gekennzeichnet, daß die Rotoren (9) jeweils hohl ausgebildet, filtermittelseitig mit einer flexiblen Membran (35) versehen und mit einem gasförmigen oder flüssigen Druckmittel, vorzugsweise Druckwasser, zum weiteren entfeuchtenden Filterkuchenpressen mittels der Membran (35) beaufschlagbar sind.

5. Kammerfilterpresse nach Anspruch 3 oder 4, dadurch gekennzeichnet, daß die Rotorwelle (10) hohl ausgebildet, mit Verbindungsbohrungen (33) zu den hohlen Rotoren (9) versehen und mit der Waschflüssigkeit bzw. dem Druckmittel beaufschlagbar ist.

6. Kammerfilterpresse nach einem der vorstehenden Ansprüche, dadurch gekennzeichnet, daß die Rotorwelle (10) einen reversierbaren Drehantrieb (11) aufweist.

7. Kammerfilterpresse nach einem der vorstehenden Ansprüche, dadurch gekennzeichnet, daß die Filtermittel (2) jeweils auf block- oder rippenförmigen Vorsprüngen (38) am Boden des benachbarten Hohlraumes (3) zur Filtrataufnahme aufliegen, vorzugsweise über eine perforierte Stützplatte (39).

8. Kammerfilterpresse nach einem der vorstehenden Ansprüche, dadurch gekennzeichnet, daß die Filtermittel (2) jeweils filterkuchenseitig mit einer perforierten Abriebschutzdecke, vorzugsweise einer geschlitzten oder gelochten Metallfolie oder einem Metallgewebe, versehen sind.

9. Kammerfilterpresse nach einem der vorhergehenden Ansprüche, dadurch gekennzeichnet, daß die erste Verbindungsstange (16) bzw. mindestens eine der ersten Verbindungsstangen (16) und/oder die zweite Verbindungsstange (17) bzw. mindestens eine der zweiten Verbindungsstangen (17) hohl ausgebildet, mit Verbindungsbohrungen (20 bzw. 21) zu den Hohlräumen (4) zur Filtrataufnahme der ersten Kammerplatten (12) bzw. zu den Hohlräumen (4) zur Trübenaufnahme der zweiten Kammerplatten (13) versehen und mit einer Filtratabzugsleitung (6) und/oder einer Zufuhrleitung (24) für eine Flüssigkeit, vorzugsweise Wasser, zum Filtermittel- und/oder Filterkuchenwaschen und/oder einer Unterdruckleitung (25) zur weiteren Filterkuchenentfeuchtung bzw. mit einer Trübezufuhrleitung (5) und/oder einer Zufuhrleitung (26) für eine Flüssigkeit, vorzugsweise Wasser, zum Filterkuchen- und/oder Filtermittelwaschen und/oder einer Zufuhrleitung (27) für ein gasförmiges Druckmittel, vorzugsweise Druckluft, zur weiteren Filterkuchenentfeuchtung verbindbar ist.

10. Kammerfilterpresse nach einem der vorhergehenden Ansprüche, dadurch gekennzeichnet, daß die zweiten Kammerplatten (13) stationär angeordnet sind und die erste Verbindungsstange (16) bzw. die ersten Verbindungsstangen (16) an einem äußeren Joch (18) befestigt ist bzw. sind, welches mittels eines Antriebes (19) gegenüber den zweiten Kammerplatten (13) verstellbar ist und den Dreh- sowie Axialverschiebungsantrieb (11) der Rotorwelle (10) trägt.

11. Kammerfilterpresse nach einem der vorhergehenden Ansprüche, dadurch gekennzeichnet, daß die ersten Kammerplatten (12) im jeweiligen Randbereich von der bzw. den zweiten Verbindungsstange(n) (17) senkrecht durchsetzt und darauf geführt sind.

12. Kammerfilterpresse nach einem der vorhergehenden Ansprüche, dadurch gekennzeichnet, daß die Rotorwelle (10) waagerecht angeordnet ist und wenigstens zwei der senkrechten zweiten Kammerplatten (13) oder zwei mit der bzw. den zweiten Verbindungsstangen (17) verbundene, senkrechte Endplatten (14) oder eine der senkrechten zweiten Kammerplatten (13) und eine mit der bzw. den zweiten Verbindungsstangen (17) verbundene, senkrechte Endplatte (14) mit unteren Standfüßen (15) versehen sind.

13. Kammerfilterpresse nach dem Oberbegriff des Anspruchs 1, dadurch gekennzeichnet, daß die zweiten Kammerplatten jeweils aus einem mit Ausräumöffnungen (55) am Umfang versehenen Distanzring (53) und einem allen Distanzringen (53) gemeinsamen, den Stapel aus Distanzringen (53) und die dazwischenliegenden ersten Kammerplatten (52) umgebenden Kammergehäuse (50) gebildet sind, das an den ersten Kammerplatten (52) abgedichtet und gegenüber dem Stapel aus Distanzringen (53) und Kammerplatten (52) in axialer Richtung verschiebbar ist, um die Ausräumöffnungen (55) freizulegen, daß die Rotoren (9) jeweils scheibenförmig sind und auf der dem Filtermittel (2) zugewandten Seite mit wenigstens einer axial vorstehenden Rippe (31) versehen sind, die sich vom Mittenbereich zum Umfang des Rotors (9) erstreckt, daß die Rotoren zum Trübebewegen sowie rührenden und pressenden Filterkuchen kneten beim Filtern und zum Filterkuchen pressen sowie -entfernen ausgebildet sind und daß die Rotorwelle (10) mit den Rotoren (9) in axialer Richtung verschiebbar in der Filterpresse gelagert ist und mit einem Dreh- sowie Axialverschiebungsantrieb (11) verbunden ist.

14. Kammerfilterpresse nach Anspruch 13, dadurch gekennzeichnet, daß

a) die Rotorwelle (10) hohl ist und in ihr ein Zuganker (56) angeordnet ist, der die Kammerplatten (52) und die Distanzringe (53) miteinander im Stapel (51) verspannt, und der Stapel (51), mit dem Dreh- sowie Axialverschiebungsantrieb (11) der Rotorwelle (10) verbunden ist, und

b) der Stapel (51) zusammen mit dem Dreh- sowie Axialverschiebungsantrieb (11) der Rotorwelle (10) gegenüber dem Kammergehäuse (50) mittels eines Antriebes (57) zwischen einer Schließstellung und einer Öffnungsstellung für die Ausräumöffnungen (55) der Distanzringe (53) in welcher das Kammergehäuse (50) und der Stapel (51) aneinanderliegen bzw. voneinander entfernt sind, axial bewegbar ist.

15. Kammerfilterpresse nach Anspruch 14, dadurch gekennzeichnet, daß die hohle Rotorwelle (10) Verbindungsbohrungen zu den Hohlräumen (3) zur Filtrataufnahme der Kammerplatten (52) aufweist und der Zuganker (56) hohl ausgebildet, mit Verbindungsbohrungen in die Rotorwelle (10) versehen und mit einer Filtratabzugsleitung (6) und/oder einer Zuführleitung (24) für eine Flüssigkeit, vorzugsweise Wasser, zum Filtermittel und/oder Filterkuchenwaschen und/oder einer Unterdruckleitung (25) zur weiteren Filterkuchenentfeuchtung verbindbar ist.

16. Kammerfilterpresse nach Anspruch 14, dadurch gekennzeichnet, daß die hohle Rotorwelle (10) Verbindungsbohrungen zu den Hohlräumen (4) zur Trübenaufnahme zwischen den Kammerplatten (52) aufweist und der Zuganker (56) hohl ausgebildet, mit Verbindungsbohrungen in die Rotorwelle (10) versehen und mit einer Trübezuführleitung (5) und/oder einer Zufuhrleitung (26) für eine Flüssigkeit, vorzugsweise Wasser, zum Filterkuchen und/oder Filtermittelwaschen und/oder einer Zufuhrleitung (27) für ein gasförmiges Druckmittel, vorzugsweise Druckluft, zur weiteren Filterkuchenentfeuchtung verbindbar ist.

17. Kammerfilterpresse nach einem der Ansprüche 13 bis 16, dadurch gekennzeichnet, daß das Kammergehäuse (50) mit einer äußeren Heiz- und/oder Kühleinrichtung (60), vorzugsweise einem mit einem gasförmigen oder flüssigen Heiz- bzw. Kühlmittel beaufschlagbaren Heiz- bzw. Kühlmantel, versehen ist.

18. Kammerfilterpresse nach einem der Ansprüche 13 bis 17, dadurch gekennzeichnet, daß im Kammergehäuse (50) auf einer Seite des Stapels (51) ein Rührwerk (90) für ausgeräumten Filterkuchen (7) vorgesehen ist.

19. Kammerfilterpresse nach einem der Ansprüche 13 bis 18, dadurch gekennzeichnet, daß das Kammergehäuse (50) und der Stapel (51) zylindrisch oder konisch ausgebildet sind.

20. Kammerfilterpresse nach Anspruch 19, dadurch gekennzeichnet, daß das konische Kammergehäuse (50) vollkommen geschlossen ausgebildet ist und den konischen Stapel (51) auch in der Öffnungsstellung für die Ausräumöffnungen (55) umschließt.

21. Kammerfilterpresse nach Anspruch 19, dadurch gekennzeichnet, daß ein zweiteiliges, doppelkonisches Kammergehäuse (50) und ein doppelkonischer Stapel (51) vorgesehen sind, wobei die beiden Hälften des Kammergehäuses (50) jeweils gegenüber dem stationären Stapel (51) axial bewegbar sind.

22. Kammerfilterpresse nach einem der Ansprüche 13 bis 21, dadurch gekennzeichnet, daß zum Auswechseln der radial geschlitzten Filtermittel (2) das Kammergehäuse (50) und der Stapel (51) vollständig auseinanderbewegbar und zwischen den Kammerplatten (52) und den Distanzringen (53) Halter (78) vorgesehen sind, welche nach dem Lösen der Verspannung des außerhalb des Kammergehäuses (50) befindlichen Stapels (51) ein Auseinanderlaufen der Kammerplatten (52) und der Distanzringe (53) um eine bestimmte Strecke erlauben, so daß die Verklemmung der Filtermittel (2) am Außenumfang, zwischen den Kammerplatten (52) und den Distanzringen (53) gelöst ist.

23. Kammerfilterpresse nach einem der Ansprüche 13 bis 22, dadurch gekennzeichnet, daß das Kammergehäuse (50) und der Stapel (51) senkrecht oder schräg angeordnet sind.

## Claims

1. A chamber filter press, comprising a plurality of chambers (1) disposed parallely to each other, wherein each of which comprises a hollow space (4,3) of circular cross section on either side of a filter medium (2) for receiving pulp and filtrate, respectively, and further comprising rotors (9), of whith a respective one is disposed in each one of the hollow space (4) for receiving pulp, said rotors (9) being mounted on a common rotor shaft (10) for rotation therewith which centrically penetrates the hollow spaces (3,4) and the filter media (2), whereas each of the hollow spaces (3) for receiving filtrate is defined by a respective first chamber plate (12 ; 52) covered by said filter medium (2) and each of the hollow spaces (4) for receiving pulp is defined by a respective second chamber plate (15 ; 53,50) receiving said rotor (9), characterized in that the first chamber plates (12) are affixed to at least one common first connecting rod (16) and the second chamber plates (13) are affixed to a at least one common second connecting rod (17), which rods (16,17) extend parallely with respect to said rotor shaft (10), said connecting rods (16,17) being displaceable with respect to each other in the axial direction in order to simultaneously open and close, respectively, said hollow spaces (4) for receiving pulp by a mutual axial displacement of the first and second chamber plates (12,13), that said rotors (9) each are formed disc-like and are provided at the surface facing to the filter medium (2) with at least one axially protruding rib (31) extending from the central region to the periphery of the rotor (9), that the rotors are adapted for agitating the pulp and for kneading the filter cake while stirring and compressing it during the filtering operation and for compressing and removing the filter cake after the filtering operation, and that the rotor shaft (10) along with the rotors (9) is mounted within the filter press in an axially displaceable manner and is connected to a rotational and axial displacement drive unit.

2. The chamber filter press a defined in claim 1, characterized in that each two chambers (1) a grouped in pairs by two chambers (1) adjacent to each other having a common first chamber plate (12) which is covered on either side by filter media (2) and confines a hollow space (3) for receiving filtrate common to both chambers (1), and by the hollow spaces (4) for receiving pulp adjoining on either side thereof are common to both chambers (1) adjoining on either side of said first-mentioned chambers (1), comprising a single rotor (9) in the hollow space (4) for receiving pulp common to the respective two chambers (1), and in that the external peripheral walls of the first chamber plates (12) sealingly engage the respective internal peripheral walls of the second chamber plates (13) and are mutually displaceable so as by axial displacement all of said first chamber plates (12) are allowed to simultaneously enter deeper into the respective associated second chamber plates (13) or totally disengage therefrom.

3. The chamber filter press as defined in any one of claims 1 or 2, characterized in that the rotors (9) are hollow and provided on the filter medium side with openings (32) for spraying and can be acted upon by a liquid for washing the filter cake and/or the filter medium, and/or by a gaseous pressure medium, in particular pressurized air, for further dewatering the filter cake.

4. The chamber filter press as defined in any one of claims 1 to 3, characterized in that the rotors (9) are hollow and provided on the filter medium side with a flexible membrane (35) and can be acted upon by a gaseous or liquid pressure medium, preferrably pressurized water, for compressing the filter cake further by means of the membrane (35) so as to dewater said filter cake.

5. The chamber filter press as defined in claim 3 or 4, characterized in that the rotor shaft (10) is hollow and is connected with connecting boreholes (33) to the hollow rotors (9) and can be acted upon by the wash liquid and the pressure medium, respectively.

6. The chamber filter press as defined in any one of the preceding claims, characterized in that the rotor shaft (10) is provided with a reversible rotational drive (11).

7. The chamber filter press as defined in any one of the preceding claims, characterized in that the filter media (2) each are supported on block- or rib-shaped projections (38) at the bottom of the adjacent hollow space (3) for receiving filtrate, preferably by means of a perforated supporting plate (39).

8. The chamber filter press as defined in any one of the preceding claims, characterized in that the filter media (2) are provided on the filter-cake side with a perforated cover as protection against abrasion, preferably a metal foil provided with slots or perforations, or a metal gaze.

9. The chamber filter press as defined in any one of the preceding claims, characterized in that the first connecting rod (16) or at least one of the first connecting rods (16) and/or the second connecting rod (17) or at least one of the second connecting rods (17) are hollow, are provided with connecting boreholes (20 and 21, respectively) to the hollow spaces (4) of the first chamber plates (12) for receiving filtrate or to the hollow spaces (4) of the second chamber plates (13) for receiving pulp and can be connected with a filtrate outlet pipeline (6) and/or a feed pipeline (24) for a liquid for washing the filter medium and/or the filter cake, and/or a vacuum pipeline (25) for further dewatering the filter cake and with a feed pipeline (5) for pulp, respectively, and/or a feed pipeline (26) for a liquid, preferably water, for washing the filter cake and/or the filter medium, and/or a feed pipeline (27) for a gaseous pressure medium, preferably pressurized air, for further dewatering the filter cake.

10. The chamber filter press as defined in any one of the preceding claims, characterized in that the second chamber plates (13) are stationary and the first connecting rod (16) or the first connecting rods (16) is or are attached to an external crossbar (18), which is adjustable by means of a drive unit (19) relative to the second chamber plates (13) and which carries the rotational as well as axial displacement drive unit (11) of the rotor shaft (10).

11. The chamber filter press as defined in any one of the preceding claims, characterized in that the first chamber plates (12) are penetrated perpendicularly in the respective edge region by the second connecting rod(s) (17) and are guided thereon.

12. The chamber filter press as defined in any one of the preceding claims, characterized in that the rotor shaft (10) is arranged horizontally and at least two of the vertical second chamber plates (13) or two of the vertical end plates (14), which are connected with the connecting rods (17), or one of the vertical second chamber plates (13) and one vertical end plate (14), which is connected with the second connecting rod(s) (17), are provided with lower base feet (15).

13. The chamber filter press as defined in the preambule of claim 1, characterized in that the second chamber plates each consist of a spacer ring (53) provided with discharge openings (55) at its periphery and a chamber housing (50) common to all spacer rings (53) and surrounding the stack of spacer rings (53) and of the first chamber plates (52) disposed therebetween said common housing (50) being in sealing engagement with said first chamber plates (52) and being axially displaceable with respect to the stack of spacer rings (53) and chamber plates (52), that the rotors (9) each are disk-like and are provided with at least one axially protruding rib (31) extending from the center region to the periphery of the rotor (9), that the rotors are adapted for agitating the pulp and for kneading the filter cake while stirring and compressing it during filtering and for compressing and removing the filter cake, and that the rotor shaft (10) along with the rotors (9) is axially displaceably mounted within said filter press and is connected to a rotational as well as axial displacement drive unit (11).

14. The chamber filter press as defined in claim 13, characterized in that

    a) the rotor shaft (10) is hollow and a tie rod (56) is disposed therein which fasten the chamber plates (52) and the spacer rings (53) together in a stack (51) and said stack (51) is connected to said rotational and axial displacement drive unit (11) of the rotor shaft (10) ; and

    b) the stack (51) with the rotational and axial displacement drive unit (11) of the rotor shaft (10) can be moved axially with respect to the chamber housing (50) by means of a drive unit (57) between a closed position and an open position for the discharge openings of the spacer rings (53), in which the chamber housing (50) and the stack (61) are in the adjacent position or removed fom each other respectively.

15. The chamber filter press as defined in claim 14, characterized in that the hollow shaft (10) has connecting boreholes to the hollow spaces (3) in the chamber plates (52) for receiving filtrate and the tie rod (36) is hollow, provided with connecting boreholes into the rotor shaft (10) and connectable with a filtrate outlet pipeline (6) and/or a feed pipeline (24) for a liquid, preferably water, for washing the filter medium and/or the filter cake and/or a vacuum pipeline for further dewatering the filter cake.

16. The chamber filter press as defined in claim 14, characterized in that the hollow rotor shaft (10) has connecting boreholes to the hollow spaces (4) between the chamber plates (52) for receiving pulp and the tie rod (56) is hollow, provided with connecting boreholes into the rotor shaft (10) and connectable with a pulp feed pipeline (5) and/or a feed pipeline (26) for a liquid, preferably water, for washing the filter cake and/or the filter medium, and/or a feed pipeline (27) for a gaseous pressure medium, preferably pressurized air, for further dewatering the filter cake.

17. The chamber filter press as defined in any one of claims 13 to 16, characterized in that the chamber housing (50) is provided with an external heating and/or cooling device (60), preferably a heating or cooling mantel, which can be acted upon by a gaseous or liquid heating or cooling medium.

18. The chamber filter press as defined in any one of claims 13 to 17, characterized in that an agitator (90) for discharged filter cakes (7) is provided in said chamber housing (50) on one side of the stack (51).

19. The chamber filter press as defined in any one of claims 13 to 18, characterized in that the chamber housing (50) and the stack (51) have a cylindrical or conical structure.

20. The chamber filter press as defined in claim 19, characterized in that the conical chamber housing (50) has a completely closed structure and enclose the conical stack (51), even when the discharge openings (55) are in the open position.

21. The chamber filter press as defined in claim 19, characterized in that a two-part, biconical chamber housing (50) and a biconical stack (51) are provided, the two halves of the chamber housing (50) being each axially movable relative to the stationary stack (51).

22. The chamber filter press as defined in any one of claims 13 to 21, characterized in that for the purpose of exchanging the radially slotted filter medium (2), the chamber housing (50) and the stack (51) can be moved apart completely and, between the chamber plates (52) and the spacer rings (53) supports (78) are provided, which, after the fastening of the stack (51) that is outside of the chamber housing (50) is released, permit the chamber plates (52) and the spacer rings (53) to move apart by a specified distance, so that clamping of the filter media (2) at the outer circumference between the chamber plates (52) and the spacer rings (53), is released.

23. The chamber filter press as defined in any one of claims 13 to 22, characterized in that the chamber housing (50) and the stack (51) are arranged vertically or at an angle.

## Revendications

1. Filtre-presse à chambres comportant, d'une part, plusieurs chambres (1) disposées parallèlement l'une à l'autre dont chacune comprend, sur chacun des deux côtés des moyens de filtration (2), une cavité (4, 3) de section transversale sensiblement circulaire et destinée à recevoir une eau chargée ou du filtrat et, d'autre part, des rotors (9) dont chacun est disposé dans l'une des cavités d'eau chargée (4) et qui sont montés fixes en rotation sur un arbre de rotor (10) commun qui traverse de façon centrale les cavités (4, 3) et les moyens de filtration (2), chacune des cavités de filtrat (3) étant dans l'une des premières plaques de chambre (12 ; 52) que recouvre le moyen de filtration (2) et chacune des cavités d'eau chargée (4) étant délimitée par l'une des secondes plaques de chambre (13 ; 53, 50) qui reçoit le rotor (9), caractérisé en ce que les premières plaques de chambre (12) sont fixées sur au moins une première barre de liaison (16) commune et les secondes plaques de chambre (13) fixées sur au moins une seconde barre de liaison (17) commune, ces deux barres de liaison (16, 17) s'étendent parallèlement à l'arbre de rotor (10) et peuvent se déplacer en translation l'une par rapport à l'autre suivant la direction axiale en vue d'ouvrir ou fermer en même temps les cavités d'eau chargées (4) grâce à un déplacement en translation axiale des premières et secondes plaques de chambre (12, 13) les unes par rapport aux autres, en ce que chacun des rotors (9) est en forme de disque et est pourvu, sur le côté tourné vers le moyen de filtration (2), d'au moins une nervure (31) faisant saillie axialement, qui s'étend de la zone centrale à la périphérie du rotor (9), en ce que les rotors sont agencés de façon à déplacer l'eau chargée et à pétrir les gâteaux de filtration, en les remuant et les pressant, lors de la filtration, et de façon à presser et séparer ces gâteaux après la filtration, et en ce que l'arbre de rotor (10), avec ses rotors (9), est monté mobile en translation dans le filtre-presse suivant la direction axiale et est relié à une commande d'entraînement en rotation et translation axiale.

2. Filtre-presse à chambres suivant la revendication 1, caractérisé en ce que les chambres (1) sont toutes réunies par paires, deux chambres (1) voisines l'une de l'autre comportant une première plaque de chambre (12) commune qui est recouverte sur les deux côtés par un moyen de filtration (2) et entoure une cavité de filtrat (3) commune à deux chambres (1) et les cavités d'eau chargée (4) qui sont juxtaposées des deux côtés étant communes avec celles des deux chambres (1) juxtaposées des deux côtés aux chambres (1) premièrement mentionnées, un rotor unique (9) étant situé dans chaque cavité d'eau chargée (4) commune à deux chambres (1), et en ce que les parois périphériques extérieures de chacune des premières plaques de chambre (12) s'appuient de façon étanche sur les parois périphériques intérieures des secondes plaques de chambre (13) et peuvent être déplacées en translation l'une par rapport à l'autre de façon telle que, par déplacement en translation axiale, les premières plaques de chambre (12) pénètrent toutes en même temps plus profondément dans les secondes plaques de chambre (13) associées à chacune ou peuvent se libérer totalement de celles-ci.

3. Filtre-presse à chambres suivant l'une des revendications 1 ou 2, caractérisé en ce que les rotors (9) sont chacun réalisés creux, sont pourvus d'orifices d'injection (32) du côté moyen de filtration et peuvent chacun être alimentés à l'aide d'un liquide, de préférence de l'eau, destiné à laver les gâteaux de filtration et/ou les moyens de filtration et/ou à l'aide d'un agent gazeux sous pression, de préférence de l'air comprimé, destiné à une humidification plus poussée des gâteaux de filtration.

4. Filtre-presse à chambres suivant l'une des revendications 2 à 3, caractérisé en ce que les rotors (9) sont chacun réalisés creux et sont munis d'une membrane flexible (35) du côté moyen de filtration et peuvent être alimentés à l'aide d'un agent gazeux ou liquide sous pression, de préférence de l'eau sous pression, destiné à un pressage des gâteaux de filtration, à l'aide de la membrane (35), réalisant une humidification plus poussée.

5. Filtre-presse à chambres suivant la revendication 3 ou 4, caractérisé en ce que l'arbre de rotor (10) est réalisé creux et est muni de perçages de liaison (33) conduisant aux rotors creux (9) et peut être alimenté à l'aide du liquide de lavage ou de l'agent sous pression.

6. Filtre-presse à chambres suivant l'une des revendications précédentes, caractérisé en ce que l'arbre de rotor (10) comporte une commande d'entraînement en rotation réversible (11).

7. Filtre-presse à chambres suivant l'une des revendications précédentes, caractérisé en ce que chacun des moyens de filtration (2) s'applique, de préférence par l'intermédiaire d'une plaque perforée d'appui (39), sur des saillies (38) en forme de bloc ou de nervure situées au fond de la cavité de réception de filtrat (3) voisine.

8. Filtre-presse à chambre suivant l'une des revendications précédentes, caractérisé en ce que chacun des moyens de filtration (2) est pourvu, du côté gâteau de filtration, d'un recouvrement perforé de protection contre l'abrasion, de préférence d'une feuille métallique fendue ou trouée, ou d'une toile métallique.

9. Filtre-presse à chambres suivant l'une des revendications précédentes, caractérisé en ce que la première barre de liaison (16), ou au moins l'une des premières barres de liaison (16), et/ou la seconde barre de liaison (17), ou au moins l'une des secondes barres de liaison (17), est réalisée creuse, est pourvue de perçages de liaison (20 ou 21) conduisant aux cavités de réception (3) des premières plaques de chambre (12) ou aux cavités de réception d'eau chargée (4) des secondes plaques de chambre (13) et peut être mise en communication avec une tuyauterie de soutirage de filtrat (6) et/ou une tuyauterie d'alimentation (24) prévue pour un liquide, de préférence de l'eau, destiné au lavage des moyens de filtration et/ou des gâteaux de filtration et/ou une tuyauterie sous dépression (25) destinées à une déshumidification plus poussée des gâteaux de filtration, ou bien avec une tuyauterie d'alimentation en eau chargée (5) et/ou une tuyauterie d'alimentation (26) prévue pour un liquide, de préférence de l'eau, destiné au lavage des gâteaux de filtration et/ou des moyens de filtration et/ou une tuyauterie d'alimentation (27) prévue pour un agent gazeux sous pression, de préférence de l'air comprimé, destiné à une déshumidification plus poussée des gâteaux de filtration.

10. Filtre-presse à chambres suivant l'une des revendications précédentes, caractérisé en ce que les secondes plaques de chambre (13) sont disposées fixées et la première barre de liaison (16) ou les premières barres de liaison (16) est ou sont fixées sur un support extérieur (18) qui peut être déplacé par rapport aux secondes plaques de chambre (13) à l'aide d'une commande d'entraînement (19) et porte la commande d'entraînement en rotation et translation axiale (11) de l'arbre de rotor (10).

11. Filtre-presse à chambres suivant l'une des revendications précédentes, caractérisé en ce que les premières plaques de chambre (12) sont traversées verticalement. dans la zone marginale de chacune, par la ou les secondes barres de liaison (17) et sont guidées sur celles-ci.

12. Filtre-presse à chambres suivant l'une des revendications précédentes, caractérisé en ce que l'arbre de rotor (10) est disposé horizontalement et en ce qu'au moins deux des secondes plaques de chambre (13) verticales ou deux plaques d'extrémité (14) verticales et reliées à la ou aux secondes barres de liaison (17), ou bien l'une des secondes plaques de chambre (13) verticale et l'une des plaques d'extrémité (14) verticales et reliées à la ou aux secondes barres de liaison (17), sont pourvues de pieds inférieurs fixes (15).

13. Filtre-presse à chambres suivant le préambule de la revendication 1, caractérisé en ce que les secondes plaques de chambre sont chacune formée d'un anneau-entretoise (53) présentant sur sa périphérie des orifices d'expulsion (55) et d'un boîtier de chambres (50) commun à tous les anneaux-entretoises (53), qui entoure l'empilement des anneaux-entretoises (53) et des premières plaques de chambre (52) situées entre ceux-ci et qui présente une étanchéité par rapport aux premières plaques de chambre (52) et peut se déplacer en translation suivant la direction axiale par rapport à l'empilement des anneaux-entretoises (53) et de ses plaques de chambre (52) en vue de libérer les orifices d'expulsion (55), en ce que chacun des rotors (9) est en forme de disque et est muni, sur le côté tourné vers le moyen de filtration (2), d'au moins une nervure (31) en saillie axiale qui s'étend de la zone centrale à la périphérie du rotor (9), en ce que les rotors sont agencés en vue du déplacement de l'eau chargée ainsi que du pétrissage des gâteaux de filtration, en les remuant et les pressant, lors de la filtration, et en vue de presser et séparer ces gâteaux de filtration et en ce que l'arbre de rotor (10) avec ses rotors (9), est monté dans le filtre-presse de façon à pouvoir se déplacer en translation suivant la direction axiale et est relié à la commande d'entraînement en rotation et translation axiale (11).

14. Filtre-presse à chambres suivant la revendication 13, caractérisé en ce que :

a) l'arbre de rotor (10) est creux, il y est disposé un tirant (56) qui serre entre eux, dans l'empilement (51), les plaques de chambre (52) et les anneaux-entretoises (53), et l'empilement (51) est relié à la commande d'entraînement en rotation et translation axiale (11) de cet arbre de rotor (10), et

b) l'empilement (51), en commun avec la commande d'entraînement en rotation et translation axiale (11) de l'arbre de rotor (10), peut être déplacé axialement par rapport au boîtier de chambre (50) à l'aide d'une commande d'entraînement (57), entre une position de fermeture et une position d'ouverture prévue pour les orifices d'expulsion (55) des anneaux-entretoises (53), positions dans lesquelles le boîtier de chambres (50) et l'empilement (51) sont en appui l'un sur l'autre ou sont écartés l'un de l'autre.

15. Filtre-presse à chambres suivant la revendication 14, caractérisé en ce que l'arbre de rotor creux (10) comporte des perçages de liaison conduisant aux cavités de réception de filtrat (3) des plaques de chambre (52) et le tirant (56) est réalisé creux, est muni, dans l'arbre de rotor (10), de perçages de liaison et peut être mis en communication avec une tuyauterie de soutirage de filtrat (6) et/ou une tuyauterie d'alimentation (24) prévue pour un liquide, de préférence de l'eau, destiné à laver les moyens de filtration et/ou les gâteaux de filtration et/ou une tuyauterie sous dépression (25) destinée à une déshumidification plus poussée des gâteaux de filtration.

16. Filtre-presse à chambres suivant la revendication 14, caractérisé en ce que l'arbre de rotor creux (10) comporte, entre les plaques de chambre (52), des perçages de liaison conduisant aux cavités de réception d'eau chargée (4) et le tirant (56) est réalisé creux, est muni, dans l'arbre de rotor (10), de perçages de liaison et peut être mis en communication avec une tuyauterie d'alimentation en eau chargée (5) et/ou une tuyauterie d'alimentation (26) prévue pour un liquide, de préférence de l'eau, destiné à laver les gâteaux de filtration et/ou les moyens de filtration et/ou une tuyauterie d'alimentation (27) prévue pour un agent gazeux sous pression, de préférence de l'air comprimé, destiné à une déshumidification plus poussée des gâteaux de filtration.

17. Filtre-presse à chambres suivant l'une des revendications 13 à 16, caractérisé en ce que le boîtier de chambres (50) est équipé d'un dispositif extérieur de chauffage et/ou de refroidissement (60), de préférence d'une chemise de chauffage ou refroidissement pouvant être alimentée à l'aide d'un agent gazeux ou liquide de chauffage ou refroidissement.

18. Filtre-presse à chambres suivant l'une des revendications 13 à 17, caractérisé en ce que, sur un côté de l'empilement (51), il est prévu dans le boîtier de chambres (50) un agitateur (90) prévu pour les gâteaux de filtration (7) expulsés.

19. Filtre-presse à chambres suivant l'une des revendications 13 à 18, caractérisé en ce que le boîtier de chambres (50) et l'empilement (51) sont réalisés cylindriques ou coniques.

20. Filtre-presse à chambres suivant la revendication 19, caractérisé en ce que le boîtier de chambres (50) conique est réalisé entièrement fermé et entoure l'empilement conique (51) même dans la position d'ouverture prévue pour les orifices d'expulsion (55).

21. Filtre-presse à chambres suivant la revendication 19, caractérisé en ce qu'il est prévu un boîtier de chambres biconiques (50) en deux parties et un empilement biconique (51), les deux moitiés du boîtier de chambres (50) pouvant chacune se déplacer axialement par rapport à l'empilement (51) fixe.

22. Filtre-presse à chambres suivant l'une des revendications 13 à 21, caractérisé en ce que, en vue du remplacement des moyens de filtration (2) fendus radialement, le boîtier de chambres (50) et l'empilement (51) peuvent se déplacer en s'écartant entièrement l'un de l'autre et il est prévu, entre les plaques de chambre (52) et les anneaux-entretoises (53), des supports (78) qui, après annulation du serrage de l'empilement (51) se trouvant à l'extérieur du boîtier de chambres (50), permettent une séparation des plaques de chambre (52) et des anneaux-entretoises (53) les uns par rapport aux autres sur une certaine distance, de façon telle que le serrage des moyens de filtration (2), sur leur périphérie extérieure, entre les plaques de chambres (52) et les anneaux-entretoises (53) soit annulé.

23. Filtre-presse à chambres suivant l'une des revendications 13 à 22, caractérisé en ce que le boîtier de chambres (50) et l'empilement (51) sont disposés verticaux ou inclinés.

FIG. 1

FIG.2

FIG.3

FIG.4

3

FIG.5

FIG.6

FIG.7

FIG.8

FIG.9

FIG.10

FIG.11

FIG.12

FIG. 13

FIG.14

FIG. 15

FIG. 16